(19) Europäisches Patentamt / European Patent Office / Office européen des brevets

(11) **EP 3 687 699 B1**

(12) **EUROPÄISCHE PATENTSCHRIFT**

(45) Veröffentlichungstag und Bekanntmachung des Hinweises auf die Patenterteilung:
**08.06.2022   Patentblatt 2022/23**

(21) Anmeldenummer: **18709350.5**

(22) Anmeldetag: **07.03.2018**

(51) Internationale Patentklassifikation (IPC):
**B05B 1/30** *(2006.01)*      **B05B 15/58** *(2018.01)*
**B05B 15/14** *(2018.01)*

(52) Gemeinsame Patentklassifikation (CPC):
**B05B 1/3053; B05B 15/14; B05B 15/58**

(86) Internationale Anmeldenummer:
**PCT/EP2018/055578**

(87) Internationale Veröffentlichungsnummer:
**WO 2019/063136 (04.04.2019 Gazette 2019/14)**

(54) **APPLIKATOR MIT EINER DICHTUNGSMEMBRAN**

APPLICATOR WITH A SEALING MEMBRANE

APPLICATEUR MUNI D'UNE MEMBRANE ÉTANCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2017   DE 102017122488**

(43) Veröffentlichungstag der Anmeldung:
**05.08.2020   Patentblatt 2020/32**

(73) Patentinhaber: **Dürr Systems AG**
**74321 Bietigheim-Bissingen (DE)**

(72) Erfinder:
• FRITZ, Hans-Georg
 73760 Ostfildern (DE)
• WÖHR, Benjamin
 74363 Güglingen (DE)
• KLEINER, Marcus
 74354 Besigheim (DE)
• BUBEK, Moritz
 71640 Ludwigsburg (DE)
• BEYL, Timo
 74354 Besigheim (DE)
• HERRE, Frank
 71739 Oberriexingen (DE)
• SOTZNY, Steffen
 71720 Oberstenfeld (DE)
• TANDLER, Daniel
 70469 Stuttgart (DE)
• BERNDT, Tobias
 71254 Ditzingen (DE)

(74) Vertreter: **v. Bezold & Partner Patentanwälte - PartG mbB**
**Ridlerstraße 57**
**80339 München (DE)**

(56) Entgegenhaltungen:
WO-A1-03/004172      WO-A1-2013/013983
WO-A1-2015/186014    DE-A1- 2 810 761
US-A- 5 602 575

**Beschreibung**

Die Erfindung betrifft einen Applikator (z.B. einen Druckkopf) zur Applikation eines Beschichtungsmittels (z.B. Lack) auf ein Bauteil (z.B. Kraftfahrzeugkarosseriebauteil).

Aus dem Stand der Technik (z.B. US 9 108 424 B2) sind sogenannte Drop-on-Demand-Druckköpfe bekannt, die einen Tröpfchenstrahl oder einen kontinuierlichen Beschichtungsmittelstrahl ausgeben und deren Wirkprinzip auf der Verwendung von elektrischen Ventilen beruht. Dabei wird ein magnetisch angetriebener Stößel/Anker in einer Spule geführt. Ist der Anker des elektromagnetischen Aktors und das Dichtelement, welches den Ventilsitz verschließt, ein Bauteil, wird dieser im Folgenden als Ventilstößel bezeichnet. In Abhängigkeit von der Bestromung der Spule wird der Ventilstößel verschoben und eine Düse wahlweise freigegeben oder verschlossen. Derartige Druckköpfe werden auch in der WO 2012/058373 A2 beschrieben. Diese Druckköpfe arbeiten ebenfalls mit Ventilstößeln, die durch elektrische Spulen bewegt werden, wobei die Ventilstößel in einem Führungsrohr (Spuleninnenrohr) in der Spule laufen.

Problematisch bei den bekannten Druckköpfen ist die Tatsache, dass die zum Bewegen der Ventilstößel dienenden Aktoren im Betrieb dem Beschichtungsmittel ausgesetzt sind. Dies ist zunächst kein Problem, falls das Beschichtungsmittel nicht gewechselt werden soll, das Beschichtungsmittel niederviskos ist und keine größeren Drücke auftreten und die Erwärmung des Spuleninnenrohrs durch die elektrisch bestromte Spule nicht zur partiellen Beschichtungsmittelantrocknung führt. Bei der Lackierung von Kraftfahrzeugkarosserien werden aber oftmals Beschichtungsmittel mit einer höheren Viskosität (z.B. mehr als 80 mPa·s bei einer Scherrate von 1.000 s$^{-1}$) eingesetzt. Darüber hinaus erfolgt bei der Lackierung von Kraftfahrzeugkarosserien oftmals ein Farbwechsel. Weiterhin erfüllen die bekannten Druckköpfe die Anforderungen für eine Lackierung von Kraftfahrzeugkarosserien nicht, da die Druckköpfe möglichst hinterschneidungsfrei, totraumfrei und strömungstechnisch optimiert sein sollten. Im Ergebnis sind die bekannten Druckköpfe deshalb für die Lackierung von Kraftfahrzeugkarosserien nicht oder zumindest nicht optimal geeignet.

Zum allgemeinen technischen Hintergrund der Erfindung ist auch hinzuweisen auf WO 2013/013983 A1, DE 28 10 761 A1, US 5 602 575 A und WO 03/004172 A1.

Schließlich offenbart WO 2015/186014 A1 einen Applikator gemäß dem Oberbegriff von Anspruch 1. Dieser bekannte Applikator ist jedoch noch nicht vollständig befriedigend.

Der Erfindung liegt deshalb die Aufgabe zugrunde, einen entsprechend verbesserten Applikator zu schaffen.

Diese Aufgabe wird durch einen erfindungsgemäßen Applikator (z.B. Druckkopf) gemäß dem Hauptanspruch gelöst.

Der erfindungsgemäße Druckkopf eignet sich allgemein zur Applikation eines Beschichtungsmittels. Die Erfindung ist also hinsichtlich des zu applizierenden Beschichtungsmittels nicht auf ein bestimmtes Beschichtungsmittel beschränkt. Vorzugsweise ist der Druckkopf jedoch zur Applikation eines Lacks ausgelegt.

Weiterhin ist zu erwähnen, dass der erfindungsgemäße Druckkopf allgemein geeignet ist, um das Beschichtungsmittel auf ein bestimmtes Bauteil zu applizieren. Hinsichtlich des Typs des zu beschichtenden Bauteils ist die Erfindung ebenfalls nicht beschränkt. Vorzugsweise ist der erfindungsgemäße Druckkopf jedoch dazu ausgelegt, ein Beschichtungsmittel (z.B. Lack) auf ein Kraftfahrzeugkarosseriebauteil oder ein Anbauteil eines Kraftfahrzeugkarosseriebauteils zu applizieren.

Der erfindungsgemäße Druckkopf weist zunächst in Übereinstimmung mit den bekannten Druckköpfen einen Düsenraum mit mehreren Düsen auf, wobei die Düsen im Betrieb das Beschichtungsmittel in Form eines kontinuierlichen Strahls oder in Form eines Tröpfchenstrahls abgeben. Der erfindungsgemäße Druckkopf unterscheidet sich also von Zerstäubern (z.B. Rotationszerstäuber, Luftzerstäuber, etc.), die keinen räumlich begrenzten Strahl des Beschichtungsmittels abgeben, sondern einen Sprühnebel des Beschichtungsmittels. Im Betrieb des erfindungsgemäßen Druckkopfs strömt das zu applizierende Beschichtungsmittel durch den Düsenraum zu den Düsen, so dass der Düsenraum im Betrieb mit dem Beschichtungsmittel gefüllt ist.

Darüber hinaus weist der erfindungsgemäße Druckkopf in Übereinstimmung mit den bekannten Druckköpfen vorzugsweise mehrere verschiebbare Stößel auf, die den einzelnen Düsen zugeordnet sind und die jeweilige Düse in Abhängigkeit von der Stellung des Stößels wahlweise öffnen oder verschließen.

In einer Variante der Erfindung bilden die Stößel/Anker auch die Ventilnadeln und können einen Ventilsitz in Abhängigkeit von ihrer Stellung wahlweise freigeben oder verschließen.

In einer anderen Variante der Erfindung sind die verschiebbaren Stößel/Anker dagegen von den eigentlichen Ventilnadeln getrennt und wirken lediglich, mechanisch verbunden über einen sogenannten Hammer auf die Ventilnadeln, die dann in Abhängigkeit von ihrer Stellung einen Ventilsitz öffnen oder verschließen.

Im Folgenden wird nur noch von Ventilnadel gesprochen, dabei kann dies sowohl eine Ventilnadel (Aktorstößel/-anker über einen Hammer verbunden mit der Ventilnadel) als auch ein Ventilstößel (Aktorstößel/-anker ist das gleiche Bauteil wie das Dichtelement das den Ventilsitz verschließt) sein.

Hierbei ist auch zu erwähnen, dass der Ventilsitz nicht unmittelbar an der Düse angeordnet sein muss. Vielmehr besteht auch die Möglichkeit, dass der Ventilsitz der Düse vorgelagert ist und mit der Düse über eine Leitung verbunden ist.

Darüber hinaus weist der erfindungsgemäße Druckkopf in Übereinstimmung mit den bekannten Druckköpfen einen Aktorraum auf, in dem die Aktoren zum Verschieben der einzelnen Ventilnadeln angeordnet sind. Beispielsweise kann es sich bei den Aktoren um elektromagnetische Aktoren mit Magnetspulen handeln, wie es auch bei den eingangs beschriebenen bekannten Druckköpfen der Fall ist. Die Erfindung ist jedoch hinsichtlich des Typs der Aktoren nicht auf Magnetaktoren beschränkt, sondern auch mit anderen Typen von Aktoren realisierbar, wie beispielsweise piezoelektrischen Aktoren oder pneumatischen Aktoren. Vorzugsweise sind die Aktoren jedoch elektrisch ansteuerbar, so dass es sich um elektromechanische Aktoren handelt.

Es wurde bereits vorstehend zu den bekannten Druckköpfen ausgeführt, dass dabei das Problem besteht, dass der Aktorraum nicht fluidisch von dem Düsenraum getrennt ist, so dass der Aktorraum und damit auch die Aktoren im Betrieb dem Beschichtungsmittel ausgesetzt sind. Dies kann zu erwärmungsbedingten Beschichtungsmittelantrocknungen führen, wenn das Beschichtungsmittel durch die Abwärme der elektromechanischen Aktoren erwärmt wird. Darüber hinaus ist dies auch problematisch bei einem Farbwechsel, da in dem Aktorraum Beschichtungsmittel verbleiben kann, was zu einer Kontamination führt.

Der erfindungsgemäße Druckkopf sieht deshalb zusätzlich ein Dichtelement (z.B. in Form einer durchgängig geschlossene Membran oder einer Membran mit Durchführungen für Ventilnadeln) vor, das den Aktorraum von dem Düsenraum fluidisch trennt, um eine Verschmutzung des Aktorraums mit dem Beschichtungsmittel in dem Düsenraum zu vermeiden.

Im Folgenden wird anstatt des Begriffs des Dichtelements der Begriff Dichtungsmembran verwendet. Es muss sich jedoch bei dem Dichtelement nicht notwendigerweise um eine Dichtungsmembran handeln. Die Dichtungsmembran verhindert also im Betrieb und auch im ausgeschalteten Zustand, dass das in dem Düsenraum befindliche Beschichtungsmittel auch in den Aktorraum gelangt.

In einem bevorzugten Ausführungsbeispiel der Erfindung ist die Dichtungsmembran durchgehend und trennt bei allen oder zumindest bei einem Großteil der Düsen den Aktorraum von dem Düsenraum. Hierbei ist also nicht für jede Düse mit dem zugehörigen Aktor eine individuelle Dichtungsmembran vorgesehen. Vielmehr weisen hierbei alle Düsen mit den zugehörigen Aktoren eine gemeinsame Dichtungsmembran auf, die den gemeinsamen Aktorraum von dem gemeinsamen Düsenraum trennt.

Vorzugsweise ist die durchgehende Dichtungsmembran hierbei so ausgebildet, dass die einzelnen Ventilnadeln unabhängig voneinander verschoben werden können, ohne dass eine Verschiebung einer der Ventilnadeln das Öffnen und Verschließen der Düsen bei der benachbarten Ventilnadel beeinträchtigt. Im Betrieb des erfindungsgemäßen Druckkopfs ist es nämlich wünschenswert, dass die einzelnen Düsen individuell geöffnet bzw. geschlossen werden können. Die durchgehende Dichtungsmembran kann jedoch zu einer mechanischen Wechselwirkung zwischen den benachbarten Ventilnadeln führen. So führt möglicherweise ein Verschieben einer der Ventilnadeln zu einer entsprechenden Auslenkung der Dichtungsmembran, wobei diese Auslenkung der Dichtungsmembran aufgrund der Elastizität der Dichtungsmembran dann auch eine entsprechende Auslenkungskraft auf die benachbarten Ventilnadeln ausüben würde, was nicht wünschenswert wäre. Die Erfindung sieht deshalb vor, dass diese unerwünschte mechanische Wechselwirkung zwischen den benachbarten Ventilnadeln aufgrund der gemeinsamen Dichtungsmembran zumindest so weit reduziert wird, dass die benachbarten Ventilnadeln die zugehörigen Düsen unabhängig voneinander öffnen bzw. schließen können, ohne dass es zu einer wechselseitigen Störung kommt.

Dies wird dadurch erreicht, dass die gemeinsame Dichtungsmembran eine dreidimensionale Strukturierung aufweist, die verhindert, dass eine Verschiebung einer der Ventilnadeln das Öffnen und Schließen der Düsen bei den benachbarten Ventilnadeln beeinträchtigt.

In einer Variante der Erfindung befindet sich diese dreidimensionale Strukturierung der Dichtungsmembran nur auf der Seite des Aktorraumes. In einer anderen Variante der Erfindung befindet sich die dreidimensionale Strukturierung der Dichtungsmembran dagegen nur auf der Seite des Düsenraums. Schließlich besteht auch die Möglichkeit, dass sich die dreidimensionale Strukturierung der Dichtungsmembran beidseitig an der Dichtungsmembran befindet, d.h. sowohl auf der Seite des Düsenraums als auch auf der Seite des Aktorraums.

Die dreidimensionale Strukturierung kann verschiedene Strukturelemente aufweisen, wie beispielsweise mindestens einen Kubus, einen Quader, einen Tetraeder, ein Prisma, eine Rippe, eine Vertiefung oder allgemein eine Anhebung. Diese verschiedenen Typen von Strukturelementen können in der dreidimensionalen Strukturierung auch miteinander kombiniert werden.

Weiterhin ist zu erwähnen, dass die Strukturelemente der dreidimensionalen Strukturierung in einer Aufsicht auf die Dichtungsmembran beispielsweise quadratisch, rechteckig, dreieckig, parallelogrammförmig oder rundbogenförmig sein können, um nur einige Beispiele zu nennen.

Gemäß der Erfindung weist die Dichtungsmembran mindestens eine Lochreihe von Löchern auf, die den einzelnen Ventilnadeln zugeordnet sind. Die Lochreihe ist hierbei vorzugsweise gerade (linear), jedoch ist es grundsätzlich auch möglich, dass die Lochreihe in der Dichtungsmembran gekrümmt ist, beispielsweise bogenförmig.

Hinsichtlich Position und Ausrichtung und Dimension der einzelnen Strukturelemente der dreidimensionalen Strukturierung in Bezug auf die Lochreihe bestehen im Rahmen der Erfindung verschiedene Möglichkeiten.

Vorzugsweise sind die einzelnen Strukturelemente der dreidimensionalen Strukturierung jeweils langgestreckt und mit ihrer Längsachse relativ zu der Lochreihe in einer bestimmten Weise ausgerichtet. Beispielsweise können die einzelnen Strukturelemente parallel zu der Lochreihe ausgerichtet sein. Es besteht jedoch alternativ auch die Möglichkeit, dass die einzelnen Strukturelemente bezüglich der Lochreihe quer ausgerichtet sind, insbesondere rechtwinklig. Ferner besteht auch die Möglichkeit, dass die einzelnen Strukturelemente der dreidimensionalen Strukturierung in Bezug auf die Lochreihe schräg ausgerichtet sind.

Auch hinsichtlich der Position der einzelnen Strukturelemente in Bezug auf die Lochreihe bestehen im Rahmen der Erfindung verschiedene Möglichkeiten. Beispielsweise können die einzelnen Strukturelemente in mindestens einer Reihe parallel zu der Lochreihe angeordnet sein. Eine Möglichkeit hierzu besteht darin, dass die einzelnen Strukturelemente genau in der Lochreihe zwischen den benachbarten Löchern angeordnet sind. Alternativ besteht jedoch auch die Möglichkeit, dass die einzelnen Strukturelemente seitlich beabstandet und parallel zu der Lochreihe angeordnet sind, insbesondere beiderseits der Lochreihe jeweils in einer Linie mit jeweils einem der Löcher. Die Strukturelemente und die einzelnen Löcher können also so zueinander ausgerichtet sein, dass jedes Loch beiderseits der Lochreihe von jeweils einem Strukturelement benachbart ist.

Auch hinsichtlich der Dimensionsverhältnisse der einzelnen Strukturelemente in Bezug auf die Lochreihe bestehen im Rahmen der Erfindung verschiedene Möglichkeiten.

Auch hinsichtlich der Höhe der einzelnen Strukturelemente bestehen im Rahmen der Erfindung verschiedene Möglichkeiten. Hierbei ist zu erwähnen, dass die Höhe der Strukturelemente hierbei rechtwinklig zu der Grundfläche der Dichtungsmembran gemessen wird. Beispielsweise kann die Höhe der Strukturelemente jeweils innerhalb der einzelnen Strukturelemente im Wesentlichen konstant sein. Es besteht jedoch alternativ die Möglichkeit, dass die Höhe der einzelnen Strukturelemente jeweils innerhalb der Strukturelemente schwankt. Beispielsweise kann die Höhe der einzelnen Strukturelemente in Richtung zu dem jeweils angrenzenden Loch zunehmen oder abnehmen. Ferner besteht auch die Möglichkeit, dass die Höhe der einzelnen Strukturelemente zu der Lochreihe hin zunimmt oder abnimmt, d.h. von außen nach innen.

Im Rahmen der Erfindung besteht auch die Möglichkeit, dass die Dichtungsmembran um die einzelnen Löcher jeweils eine ringförmige Auswölbung aufweist. Diese ringförmige Auswölbung bildet ebenfalls eine mögliche Form eines Strukturelements der dreidimensionalen Strukturierung der Dichtungsmembran. Auch hierbei besteht wieder die Möglichkeit, dass die ringförmige Auswölbung nur auf der Seite des Aktorraums, nur auf der Seite des Düsenraums oder beidseitig angeordnet ist.

Ferner ist zu erwähnen, dass die Dichtungsmembran jeweils am Umfangsrand der Löcher jeweils einen Dichtungskragen aufweisen kann, um das jeweilige Loch gegenüber der durchgeführten Ventilnadel abzudichten. Der Dichtungskragen kann hierbei wahlweise nur zu dem Aktorraum hin abstehen, nur zu dem Düsenraum hin oder beidseitig abstehend angeformt sein. Zu dem Dichtungskragen ist auch zu erwähnen, dass der Dichtungskragen im Querschnitt beispielsweise dreieckig sein kann. Das Verhältnis des Durchmessers der Ventilnadel zur Länge der Dichtungskragens kann $\geq 0,5$, $\geq 0,7$, $>1$, $\geq 1,5$, oder sogar $\geq 2$ sein. Bei der später noch detailliert beschriebenen Erfindungsvariante mit mehreren Dichtungsmembranen können alle Dichtungsmembranen einen derartigen Dichtungskragen aufweisen.

In einer Ausgestaltung der Erfindung werden die einzelnen Ventilnadeln jeweils durch eine Pressverbindung mit einer bestimmten Anpresskraft in den Löchern der Dichtungsmembran gehalten.

In einer Variante der Erfindung ist diese Anpresskraft so bemessen, dass die Ventilnadeln in den Löchern der Dichtungsmembran axial fixiert sind und nicht in den Löchern der Dichtungsmembran axial gleiten können. Dies hat zur Folge, dass eine Verschiebung einer der Ventilnadeln zu einer entsprechenden Auslenkung der Dichtungsmembran führt.

In einer anderen Variante der Erfindung ist diese Anpresskraft dagegen so bemessen, dass die Ventilnadeln in den Löchern der Dichtungsmembran axial im Wesentlichen frei gleiten können. Dies hat zur Folge, dass eine Verschiebung einer der Ventilnadeln nicht zu einer entsprechenden Auslenkung der Dichtungsmembran führt.

Eine weitere Variante dieser Ausgestaltung der Erfindung sieht dagegen vor, dass die Ventilnadeln in den Löchern der Dichtungsmembran teilweise frei gleiten können und teilweise axial fixiert sind. Bei einer Verschiebung einer der Ventilnadeln nimmt diese Ventilnadel dann zunächst die Dichtungsmembran axial mit, was zu einer entsprechenden axialen Auslenkung der Dichtungsmembran führt. Im weiteren Verlauf der Verschiebung der Ventilnadel leistet die Dichtungsmembran dann aufgrund ihrer Elastizität einen größeren Widerstand, was zu einem Durchrutschen der Ventilnadel im weiteren Verlauf der Bewegung der Ventilnadel führt.

Ferner ist zu erwähnen, dass der Düsenraum ein relativ kleines Volumen aufweisen kann, das beispielsweise höchstens 100mL, 50mL, 10mL, 5mL oder sogar höchstens 1mL betragen kann.

Zu den Löchern der Dichtungsmembran ist ferner zu erwähnen, dass deren Innendurchmesser vorzugsweise kleiner ist als der Außendurchmesser der Ventilnadeln, um eine Abdichtung zu gewährleisten. Beispielsweise kann der Innendurchmesser der Löcher um 0,1mm, 0,2mm, 0,3mm oder 0,4mm kleiner sein als der Außendurchmesser der Ventilnadeln. Es besteht aber auch die Möglichkeit, dass der Innendurchmesser der Löcher der Dichtungsmembran um 10%-50% oder 20%-40% kleiner ist als der Außendurchmesser der Ventilnadeln.

Zu der Dichtungsmembran selbst ist noch zu erwähnen, dass diese beispielsweise aus Keramik, Metall oder aus einem Kunststoff bestehen kann. Als Kunststoffe kommen beispielsweise Polyethylen (PE), Polypropylen (PP), Polyoxymethylen (POM), thermoplastisches Polyurethan (PU), thermoplastisches Elastomer, Polytetrafluorethylen (PTFE), Polyketon (PK) oder Polyamid (PA) in Frage, um nur einige Beispiele zu nennen.

Ferner ist zu erwähnen, dass die Ventilnadeln und die Löcher in der Dichtungsmembran möglichst exakt relativ zueinander ausgerichtet sein sollten. Zwischen dem Mittelpunkt der Löcher einerseits und der Längsachse der zugehörigen Ventilnadeln besteht deshalb nur eine sehr geringe radiale Abweichung, die vorzugsweise kleiner ist als 0,2mm, 0,1mm oder sogar kleiner 0,05mm.

Weiterhin ist zu der Dichtungsmembran zu erwähnen, dass diese vorzugsweise aus einem Material mit einer bestimmten Härte besteht, die auf der Shore-Skala gemäß DIN EN ISO 868 und DIN ISO 7619-1 beispielsweise im Bereich von 20-100 Shore-A, 50-85 Shore-A, 40-90 Shore-D oder 60-80 Shore-D liegen kann.

Das Dichtelement (z.B. Dichtungsmembran) kann im Rahmen der Erfindung durch verschiedene Herstellungsverfahren hergestellt werden. Beispielsweise eignen sich zur Herstellung des Dichtelements (z.B. Dichtungsmembran) subtraktive Herstellungsverfahren, wie beispielsweise Fräsen, Bohren oder Laserbearbeitung. Alternativ ist es möglich, additive Herstellungsverfahren einzusetzen, wie beispielsweise 3D-Druck, Lasersintern oder Laserschmelzen. Weitere mögliche Herstellungsverfahren sind Spritzgussverfahren, Tiefziehverfahren und Vakuumschmelzverfahren.

In einer Ausgestaltung der Erfindung weist die Dichtungsmembran mehrere Membranschichten auf, was eine Leckageerkennung ermöglicht. Zwischen den einzelnen Membranschichten der Dichtungsmembran mündet dann vorzugsweise eine Leckagebohrung aus dem Druckkopf aus, um eine Leckage erkennen zu können, wenn eine der Membranschichten durchlässig geworden ist. Die zweite Membranschicht bildet dann eine zusätzliche Sicherheit. Beispielsweise kann die Leckagebohrung mit einem Sensor verbunden sein, der dann die Leckage aufgrund eines Beschichtungsmittelaustritts aus der Leckagebohrung erkennt. Es besteht jedoch alternativ auch die Möglichkeit, dass die Leckagebohrung in ein Schauglas oder in einen durchsichtigen Schlauch mündet, um eine Leckage optisch erkennen zu können. Die Leckagebohrung kann dann auch in eine Schmutzverdünnerentsorgung münden oder in eine Auffangwanne oder in eine Auffangnut.

In einer Ausgestaltung der Erfindung weist die Dichtungsmembran keine Löcher zur Durchführung der Ventilnadeln auf. Dies ist vorteilhaft, weil die Löcher ansonsten Dichtungsprobleme bereiten können. Bei dieser Ausgestaltung der Dichtungsmembran ohne Löcher kann die Dichtungsmembran düsenseitig jeweils eine angeformte Düsenverschlussspitze aufweisen, um die jeweilige Düse bzw. den vorgelagerten Ventilsitz in Abhängigkeit von der Auslenkung der Dichtungsmembran wahlweise zu öffnen oder zu verschließen. Die Dichtungsmembran erfüllt hierbei also nicht nur die Funktion der Abdichtung, sondern bildet gleichzeitig auch die Düsenverschlussspitze. Hierbei können die einzelnen Ventilnadeln jeweils fest mit der Dichtungsmembran verbunden sein, so dass eine Verschiebung einer der Ventilnadeln zu einer entsprechenden Auslenkung der Dichtungsmembran mit der daran angeformten Düsenverschlussspitze führt.

In einer anderen Ausgestaltung der Erfindung weist die Dichtungsmembran jedoch für die einzelnen Ventilnadeln jeweils ein Loch auf. Die einzelnen Ventilnadeln können hierbei durch das jeweils zugehörige Loch in der Dichtungsmembran durchgeführt sein, wobei die einzelnen Ventilnadeln fest und fluidisch dicht mit der Dichtungsmembran verbunden sind. Zum einen sind die einzelnen Löcher in der Dichtungsmembran also hierbei gegenüber den Ventilnadeln abgedichtet, um einen Flüssigkeitsdurchtritt durch die Löcher zu verhindern. Zum anderen bewirkt die Verbindung zwischen den Ventilnadeln und der Dichtungsmembran möglicherweise aber auch, dass eine Verschiebung der einzelnen Ventilnadeln zu einer entsprechenden Auslenkung der Dichtungsmembran führen kann.

In einer anderen Ausgestaltung der Erfindung ist dagegen in die einzelnen Löcher der Dichtungsmembran auf der Seite des Düsenraums jeweils eine Düsenverschlussspitze eingesetzt, welche die zugehörige Düse in Abhängigkeit von der Auslenkung der Dichtungsmembran wahlweise öffnet oder verschließt. Die Ventilnadeln sind dagegen im Bereich der Löcher fest mit der Dichtungsmembran verbunden, insbesondere durch eine Verschraubung zwischen den Ventilnadeln einerseits und den Düsenverschlussspitze andererseits, die auf gegenüberliegenden Seiten der Dichtungsmembran angeordnet sind.

In einer Ausgestaltung der Erfindung weisen die Ventilnadeln jeweils eine Ventilnadelspitze auf, die sich zu ihrem freien Ende hin konisch verjüngt.

Darüber hinaus besteht im Rahmen der Erfindung die Möglichkeit, dass die einzelnen Ventilnadelspitzen jeweils ein separates Dichtelement aufweisen.

Beispielsweise kann das separate Dichtelement auf die Ventilnadelspitze aufgeklebt werden. Alternativ besteht auch die Möglichkeit, dass die Ventilnadelspitze eine Fassung aufweist, in die die Ventilnadelspitze eingesetzt ist. Darüber hinaus besteht alternativ auch die Möglichkeit, dass die Ventilnadelspitze auf einem Teil ihrer Länge von dem separaten Dichtelement umhüllt wird.

Ferner ist hierbei zu erwähnen, dass die Ventilnadel und das Dichtelement aus unterschiedlichen Materialien bestehen können, insbesondere aus Metall für die Ventilnadel und aus Kunststoff für das Dichtelement.

Die Befestigung des Dichtelements an der Ventilnadelspitze kann beispielsweise durch ein Spritzgussverfahren, durch Tauchen, durch Aufschweißen oder durch Aufvulkanisieren erfolgen, um nur einige Beispiele zu nennen.

Es wurde bereits vorstehend kurz erwähnt, dass die Dichtungsmembran mehrere Membranschichten aufweisen kann, was eine Leckageerkennung ermöglicht. Es ist jedoch alternativ auch möglich, dass nicht eine einzige Dichtungsmembran mit mehreren Membranschichten verwendet wird, sondern mehrere getrennte Membranen, die einen Fluidraum zwischen sich einschließen. Die eine Membran ist hierbei düsenseitig angeordnet und schließt den Düsenraum ein, der im Betrieb mit dem zu applizierenden Beschichtungsmittel gefüllt ist. Die andere Membran ist dagegen aktorseitig angeordnet, so dass die beiden Membranen einen Fluidraum zwischen sich einschließen. Dies ermöglicht ebenfalls eine Leckageerkennung und hat darüber hinaus noch weitere konstruktive Vorteile, wie nachstehend noch im Einzelnen erläutert werden.

Der erfindungsgemäße Applikator weist vorzugsweise einen Beschichtungsmitteleinlass auf, um das zu applizierende Beschichtungsmittel in den Düsenraum des Applikators einzuspeisen. Darüber hinaus weist der erfindungsgemäße Applikator vorzugsweise einen Beschichtungsmittelauslass auf, um nicht appliziertes Beschichtungsmittel aus dem Düsenraum auszuleiten, beispielsweise im Rahmen einer Materialzirkulation. Ferner verfügt der erfindungsgemäße Applikator vorzugsweise über einen Sperrfluideinlass, um ein Sperrfluid in den Fluidraum zwischen den beiden Membranen einzuleiten. Schließlich verfügt der erfindungsgemäße Applikator vorzugsweise auch über einen Sperrfluidauslass, um das Sperrfluid wieder aus dem Fluidraum zwischen den beiden Membranen abzuführen, beispielsweise im Rahmen einer Materialzirkulation.

Darüber hinaus beansprucht die Erfindung auch Schutz für eine Applikationsanlage mit dem vorstehend beschriebenen erfindungsgemäßen Applikator und weiteren Bauteilen beziehungsweise Komponenten.

So umfasst die erfindungsgemäße Applikationsanlage vorzugsweise eine Beschichtungsmittelquelle, die das Beschichtungsmittel in den Beschichtungsmitteleinlass des Applikators einspeist. Die Beschichtungsmittelquelle kann beispielsweise einen Beschichtungsmittelbehälter, eine Pumpe und Ventile aufweisen.

Darüber hinaus umfasst die erfindungsgemäße Applikationsanlage vorzugsweise auch eine Sperrfluidquelle, die das Sperrfluid in den Sperrfluideinlass des Applikators einspeist. Die Sperrfluidquelle kann beispielsweise einen Fluidbehälter, eine Pumpe und Ventile umfassen.

An den Sperrfluidauslass des erfindungsgemäßen Applikators kann eine Drossel angeschlossen werden, um den Druck des Sperrfluids in dem Fluidraum zu beeinflussen.

Darüber hinaus kann in dem Beschichtungsauslass des erfindungsgemäßen Applikators ein steuerbares Beschichtungsmittelventil angeschlossen sein. Beispielsweise kann das Beschichtungsmittelventil das aus dem Applikator austretende Beschichtungsmittel zur Entsorgung in einen Abfallbehälter oder zur Wiederverwendung in einen Zirkulationsbehälter leiten.

Ferner kann ein steuerbares Sperrfluidventil an den Sperrfluidauslass des erfindungsgemäßen Applikators angeschlossen sein. Das Sperrfluidventil kann das austretende Sperrfluid beispielsweise wahlweise zur Entsorgung in einen Abfallbehälter oder zur Wiederverwendung zu der Sperrfluidquelle leiten.

Bei dem Sperrfluid kann es sich beispielsweise um eine Flüssigkeit handeln, wie beispielsweise ein wasserbasierte Spülmittel, ein organisches Spülmittel oder ein Lösemittelgemisch. Alternativ besteht jedoch auch die Möglichkeit, dass es sich bei dem Sperrfluid um ein Gas handelt, wie beispielsweise Druckluft. Andere Varianten sehen dagegen vor, dass es sich bei dem Sperrfluid um einen Lackbestandteil des zu applizierenden Lacks handelt oder um ein lackverträgliches Medium, wie beispielsweise (C10-C21)Alkansulfonsäurephenylester (Mesamoll ®).

Die erfindungsgemäße Applikationsanlage weist vorzugsweise auch eine Steuereinrichtung auf, die die Befüllung des Fluidraums und/oder des Düsenraums mit dem Sperrfluid beziehungsweise mit dem zu applizierenden Beschichtungsmittel steuert.

Beispielsweise kann die Steuereinrichtung den Fluidraum zeitgesteuert mit dem Sperrfluid befüllen, beispielsweise stündlich, täglich, wöchentlich oder monatlich.

Alternativ besteht die Möglichkeit, dass die Steuereinrichtung den Fluidraum jeweils vor Applikationsbeginn einmalig mit dem Sperrfluid befüllt.

Ferner besteht alternativ auch die Möglichkeit, dass der Fluidraum permanent mit dem Sperrfluid durchströmt wird.

Im Betrieb der erfindungsgemäßen Applikationsanlage ist vorzugsweise vorgesehen, dass die Speerfluidquelle den Fluidraum des Applikators mit einem bestimmten Druck des Sperrfluids befüllt.

Beispielsweise kann der Druck des Sperrfluids in dem Fluidraum gesteuert eingestellt werden, d.h. ohne eine Rückkopplungsschleife.

Es besteht jedoch alternativ auch die Möglichkeit, dass der Druck des Sperrfluids in dem Fluidraum mit einem Regelkreis geregelt wird, d.h. mit einer Rückkopplungsschleife. Beispielsweise kann hierbei der Beschichtungsmitteldruck in dem Düsenraum oder der Sperrfluiddruck in dem Fluidraum mittels eines Drucksensors gemessen werden, wobei der Druck dann mittels eines Druckreglers an dem Beschichtungsmitteleinlass und/oder an dem Beschichtungsmittelauslass geregelt werden kann.

In einer Alternative der Erfindung ist der vorbestimmte Druck des Sperrfluids in dem Fluidraum größer als der Beschichtungsmitteldruck in dem Düsenraum, insbesondere um 0,5 bar, 1 bar, 2 bar oder 3 bar größer. Dieser Druckunterschied hat zur Folge, dass die düsenseitige Membran von dem Druckunterschied an den beiden Membranseiten in Richtung der Düsen gedrückt wird, so dass diese Membran die Ventilnadeln in Richtung einer Schließstellung vorspannt.

In einer anderen Alternative ist dagegen vorgesehen, dass der vorbestimmte Druck des Sperrfluids in dem Fluidraum kleiner ist als der Beschichtungsmitteldruck in dem Düsenraum, insbesondere um 0,5 bar, 1 bar, 2 bar oder 3 bar. Hierbei wird die düsenseitige Membran also von dem Druckunterschied zwischen den beiden Membranseiten in Richtung der Aktoren ausgelenkt, so dass diese Membran die entsprechenden Ventilnadeln in eine Öffnungsstellung vorspannt.

In einer weiteren Alternative ist dagegen vorgesehen, dass der vorbestimmte Druck des Sperrfluids in den Fluidraum im Wesentlichen gleich dem Beschichtungsmitteldruck in dem Düsenraum ist. In dieser Alternative kompensiert der Druck des Sperrfluids in dem Fluidraum also den Beschichtungsmitteldruck in dem Düsenraum, so dass die Aktoren keine druckbedingte Kraft überwinden müssen, sondern nur die Eigenelastizität der Membran.

Weiterhin kann die Applikationsanlage ein Ausdehnungsgefäß, eine Ausdehnungsmembran oder einen Kolbenzylinder aufweisen, um den Druck des Sperrfluids in dem Fluidraum des Applikators zu beeinflussen.

Es wurde bereits vorstehend erwähnt, dass die mehrfachen Membranen eine Leckageerkennung ermöglichen. Die erfindungsgemäße Applikationsanlage umfasst deshalb vorzugsweise einen Drucksensor, der den Druck des Sperrfluids in dem Fluidraum ermöglicht, um eine Leckageerkennung zu erlauben.

Ferner wurde bereits vorstehend kurz erwähnt, dass der Druck des Sperrfluids in dem Fluidraum eine Gegenkraft auf die düsenseitige Membran ausübt, um den Druck des Beschichtungsmittels auf diese Membran zu kompensieren, zu verstärken oder überzukompensieren. Hierbei ist zu erwähnen, dass die Ventilnadeln vorzugsweise fest oder zumindest reibschlüssig mit der Dichtungsmembran verbunden sind, so dass eine Verschiebung der Ventilnadeln zu einer entsprechenden Auslenkung der Dichtungsmembran führt, während eine Auslenkung der Dichtungsmembran umgekehrt zu einer entsprechenden Auslenkung der Ventilnadeln führt. Die Dichtungsmembran und die Ventilnadeln nehmen sich also wechselseitig mit. Der Beschichtungsmitteldruck in dem Düsenraum drückt hierbei von einer Seite auf die Dichtungsmembran und erzeugt dadurch eine entsprechende Öffnungskraft auf die Ventilnadeln, welche die Ventilnadeln in eine Öffnungsstellung drückt. Der Sperrfluiddruck in dem Fluidraum drückt dagegen in entgegengesetzter Richtung auf die Dichtungsmembran und erzeugt somit eine Schließkraft, die auf die Ventilnadeln wirkt. Die Schließkraft kann beispielsweise größer oder kleiner und auch im Wesentlich gleich der Öffnungskraft sein.

Schließlich umfasst die Erfindung auch noch die Idee, einen Druckluftstoß in den Düsenraum einzuleiten. Hierzu kann eine Druckluftquelle vorgesehen sein, welche den Druckluftstoß in den Düsenraum einleitet, insbesondere nach der Montage der Applikationsanlage und vor dem Befüllen des Applikators mit dem zu applizierenden Beschichtungsmittel. Diese Idee ist von eigener schutzwürdiger Bedeutung und genießt deshalb auch unabhängig von den anderen Erfindungsaspekten Schutz, d.h. auch ohne die Merkmale des Hauptanspruchs.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:

| Figur 1A | eine schematische Darstellung eines erfindungsgemäßen Druckkopfs, wobei alle Düsen geschlossen sind, |
| Figur 1B | die schematische Darstellung aus Figur 1A, wobei eine einzige Düse geöffnet ist, |
| Figur 2 | eine schematische Darstellung der Dichtungsmembran eines erfindungsgemäßen Druckkopfs mit einem Loch zur Durchführung einer Ventilnadel, |
| Figur 3 | eine Abwandlung von Figur 2, wobei Ventilnadel und Düsenverschlussspitze getrennt und miteinander verschraubt sind, |
| Figur 4 | eine nicht erfindungsgemäße Abwandlung von Figur 3, wobei die Düsenverschlussspitze an die Dichtungsmembran angeformt ist, |
| Figur 5 | eine schematische Darstellung einer eine nicht erfindungsgemäße Dichtungsmembran eines erfindungsgemäßen Druckkopfs mit Noppen als dreidimensionale Strukturierung, |
| Figur 6 | eine schematische Aufsicht auf eine Dichtungsmembran mit einer dreidimensionalen Strukturierung, |
| Figur 7 | eine Abwandlung von Figur 6, |
| Figur 8A | eine Abwandlung von Figur 6, |
| Figur 8B | eine Schnittdarstellung entlang der Schnittlinie A-A in Figur 8A, |
| Figur 8C | eine Schnittansicht entlang der Schnittlinie B-B in Figur 8A, |
| Figur 9A | eine Abwandlung von Figur 6, |
| Figur 9B | eine Schnittansicht entlang der Schnittlinie A-A in Figur 9A, |
| Figur 9C | eine Schnittansicht entlang der Schnittlinie B-B in Figur 9A, |
| Figur 10A | eine Abwandlung von Figur 6, |
| Figur 10B | eine Schnittansicht entlang der Schnittlinie C-C in Figur 10A, |
| Figur 10C | eine Schnittansicht entlang der Schnittlinie D-D in Figur 10A, |

Figur 10D    eine Schnittansicht entlang der Schnittlinie A-A in Figur 10A,

Figur 10E    eine Schnittansicht entlang der Schnittlinie B-B in Figur 10A,

Figur 11A    eine Abwandlung von Figur 10A,

Figur 11B    eine Schnittansicht entlang der Schnittlinie C-C in Figur 11A,

Figur 11C    eine Schnittansicht entlang der Schnittlinie D-D in Figur 11A,

Figur 11D    eine Schnittansicht entlang der Schnittlinie A-A in Figur 11A,

Figur 11E    eine Schnittansicht entlang der Schnittlinie B-B in Figur 11A,

Figur 12    eine Großansicht eines Ausschnitts von Figur 11A mit Maßangaben zur Erläuterung der Größenverhältnisse,

Figur 13    eine schematische Darstellung einer Dichtungsmembran mit einem Dichtungskragen,

Figur 14    eine Abwandlung von Figur 13,

Figur 15    eine Abwandlung von Figur 13,

Figur 16    eine Abwandlung von Figur 13,

Figur 17    eine schematische Darstellung einer erfindungsgemäßen Applikationsanlage mit einem erfindungsgemäßen Applikator mit zwei Membranen,

Figur 18A    eine schematische Darstellung des Applikators mit den beiden Membranen, sowie

Figur 18B    eine Abwandlung von Figur 18A mit anderen Druckverhältnissen.

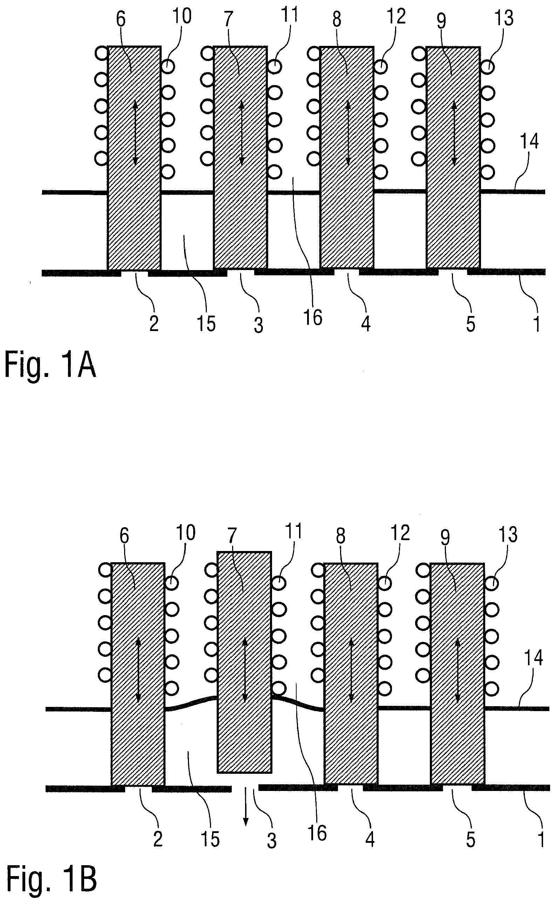

Die Figuren 1A und 1B zeigen verschiedene schematische Darstellungen eines erfindungsgemäßen Druckkopfs, der in einer Lackieranlage eingesetzt werden kann, um Lack auf Kraftfahrzeugkarosseriebauteile zu applizieren. Teilweise stimmt der erfindungsgemäße Druckkopf in Aufbau und Funktionsweise mit den eingangs beschriebenen bekannten Druckköpfen überein, so dass im Folgenden nur die erfindungswesentlichen Details ausführlicher beschrieben werden.

Der erfindungsgemäße Druckkopf weist zunächst eine Düsenplatte 1 mit zahlreichen Düsen 2-5 auf, wobei durch die Düsen 2-5 jeweils ein räumlich eng begrenzter Beschichtungsmittelstrahl abgegeben werden kann. In dieser schematischen Darstellung sind nur die vier Düsen 2-5 dargestellt. Tatsächlich weist der erfindungsgemäße Druckkopf jedoch eine wesentlich größere Zahl von Düsen auf, die beispielsweise in Reihen und Spalten angeordnet sein können, was aus dieser schematischen Darstellung nicht ersichtlich ist.

Den einzelnen Düsen 2-5 ist jeweils eine Ventilnadel 6-9 zugeordnet, wobei die einzelnen Ventilnadeln 6-9 jeweils in Richtung des Doppelpfeils verschiebbar sind.

Zur Verschiebung der einzelnen Ventilnadeln 6-9 sind mehrere elektromagnetische Aktoren 10-13 vorgesehen, die hier nur schematisch als Spule gezeichnet sind.

Die Ventilnadeln 6-9 können die Düsen 2-5 in Abhängigkeit von ihrer Stellung wahlweise schließen oder freigeben. In der Darstellung gemäß Figur 1A werden alle Düsen 2-5 von den zugehörigen Ventilnadeln 6-9 verschlossen, so dass kein Lack abgegeben wird. In der Darstellung gemäß Figur 1B ist die Ventilnadel 7 dagegen von der Düse 3 abgehoben, so dass durch die Düse 3 ein Lackstrahl oder ein Tropfen abgegeben wird, wie durch den Pfeil angedeutet wird. In der Darstellung gemäß Figur 1B werden die anderen Düsen 2, 4, 5 dagegen von den zugehörigen Ventilnadeln 6, 8 bzw. 9 verschlossen.

Darüber hinaus weist der erfindungsgemäße Druckkopf eine durchgehende Dichtungsmembran 14 auf, die in dem Druckkopf einen Düsenraum 15 von einem Aktorraum 16 fluidisch trennt. Der zu applizierende Lack wird hierbei über den Düsenraum 15 zu den einzelnen Düsen 2-5 geführt, d.h. der Düsenraum 15 ist im Betrieb mit dem zu applizierenden Lack gefüllt.

In dem Aktorraum 16 befinden sich dagegen die Aktoren 10-13 oder auch nur die Ventilnadeln. Die Dichtungsmembran 14 verhindert hierbei, dass Lack aus dem Düsenraum 15 in den Aktorraum 16 eindringen kann. Dies ist vorteilhaft, weil die Erwärmung der Aktoren 10-13 dadurch nicht oder nur in vernachlässigbarem Maße auf den Lack wirkt, wodurch erwärmungsbedingte Lackanhaftungen im Düsenraum 15 und im Aktorraum 16 verhindert werden. Darüber hinaus ermöglicht die Trennung durch die Dichtungsmembran 14 Farbwechsel, da der Aktorraum 16 nicht gespült werden muss.

Hierbei ist zu erwähnen, dass die einzelnen Ventilnadeln 6-9 jeweils durch Löcher in der Dichtungsmembran 14 hindurchgeführt werden können, wobei die Dichtungsmembran 14 fest mit den einzelnen Ventilnadeln 6-9 verbunden sein kann. Dies hat zur Folge, dass beispielsweise die Verschiebung der Ventilnadel 7 in Figur 1B zu einer entsprechenden lokalen Auslenkung der Dichtungsmembran 14 führt. Diese lokale Auslenkung der Dichtungsmembran im Bereich der Ventilnadel 7 führt zwar aufgrund der Elastizität der Dichtungsmembran 14 auch zu entsprechenden Kräfte auf die benachbarten Ventilnadeln 6 und 8. Allerdings ist die Dichtungsmembran 14 so beschaffen, dass eine unerwünschte Wechselwirkung zwischen den benachbarten Ventilnadeln 6 einerseits und 8 andererseits verhindert wird. Dies ist wichtig, damit die einzelnen Ventilnadeln 6-9 unabhängig voneinander geöffnet bzw. geschlossen werden können. Die Dichtungsmembran 14 weist deshalb eine dreidimensionale Strukturierung auf, die verhindert, dass die Auslenkung der Dichtungsmembran zu einem mechanischen Übersprechen auf die benachbarten Ventilnadeln 6 bzw. 8 führt. Diese dreidimensionale Strukturierung wird später noch eingehend beschrieben.

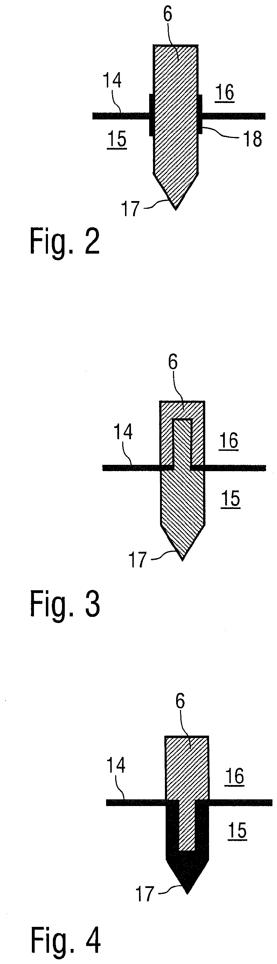

Die Figuren 2-4 zeigen verschiedene mögliche Ausgestaltungen zur Durchführung, Anbindung oder Auflegen der Ventilnadeln 6-9 durch die Dichtungsmembran 14, wobei die Zeichnungen nur die Ventilnadel 6 zeigen.

Bei Figur 2 ist die Ventilnadel 6 durchgehend und bildet somit mit ihrer Düsenverschlussspitze 17 gleichzeitig auch ein Dichtungselement zum Verschließen bzw. Freigeben eines entsprechenden Ventilsitzes.

Darüber hinaus ist aus der Zeichnung ersichtlich, dass an die Dichtungsmembran 14 ein Dichtungskragen 18 angeformt ist, der sowohl zu dem Aktorraum 16 hin als auch zu dem Düsenraum 15 hin von der Dichtungsmembran 14 absteht.

Bei der Ausgestaltung gemäß Figur 3 ist die Düsenverschlussspitze 17 von der Ventilnadel 6 getrennt und mit der Ventilnadel 6 verschraubt. Hierbei wird die Dichtungsmembran 14 zwischen der Ventilnadel 6 und der Düsenverschlussspitze 17 eingepresst, so dass die Ventilnadel 6 fest mit der Dichtungsmembran 14 verbunden ist. Eine Verschiebung der Ventilnadel 6 führt also zu einer entsprechenden Auslenkung der Dichtungsmembran 14.

Bei der Ausgestaltung gemäß Figur 4 weist die Dichtungsmembran 14 kein Loch zur Durchführung der Ventilnadel 6 auf. Vielmehr ist die Düsenverschlussspitze 17 einstückig an die Dichtungsmembran 14 angeformt. Auch hierbei ist die Ventilnadel 6 fest mit der Dichtungsmembran 14 verbunden, so dass eine Verschiebung der Ventilnadel 6 zu einer entsprechenden Auslenkung der Dichtungsmembran 14 führt.

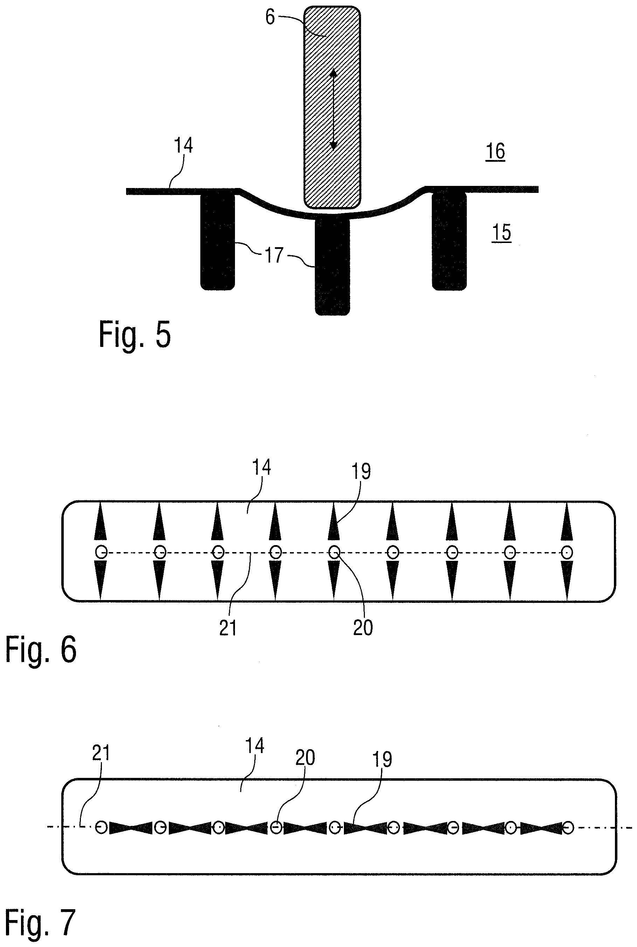

Figur 5 zeigt eine Dichtungsmembran 14 mit angeformten Düsenverschlussspitzen. Die Ventilnadel 6 kann mit der Dichtungsmembran 14 verbunden sein, sie kann aber auch nur aufgesetzt sein. Im Falle einer nur aufgesetzten Ventilnadel 6 wird das Öffnen der Düse durch den Lackdruck bewirkt. Der Lackdruck verformt dabei die Dichtungsmembran 14 in Richtung des Aktorraums 16 vom Düsenraum 15 weg.

Figur 6 zeigt eine schematische Darstellung einer erfindungsgemäßen Dichtungsmembran 14, die teilweise mit den vorstehend beschriebenen Ausführungsbeispielen übereinstimmt, so dass zur Vermeidung von Wiederholungen auf die vorstehende Beschreibung verwiesen wird, wobei für entsprechende Einzelheiten dieselben Bezugszeichen verwendet werden.

Hierbei ist zu erwähnen, dass in der Dichtungsmembran 14 zahlreiche Löcher 20 angeordnet sind, und zwar äquidistant in einer einzigen linearen Lochreihe 21. Die Löcher 20 in der Dichtungsmembran 14 dienen hierbei - wie bereits vorstehend beschrieben - zur Durchführung der Ventilnadeln 6-9 bzw. der weiteren Ventilnadeln, die in den vorangegangenen Zeichnungen nicht dargestellt sind.

Die Strukturelemente 19 haben zur Folge, dass eine lokale Auslenkung der Dichtungsmembran 14 aufgrund einer entsprechenden Verschiebung der zugehörigen Ventilnadel 6 lokal begrenzt bleibt und nicht auf die benachbarte Ventilnadel 7 mechanisch überspricht.

Die Strukturelemente 19 der dreidimensionalen Strukturierung der Dichtungsmembran 14 sind hierbei in einer Aufsicht auf die Dichtungsmembran 14 dreieckig. Darüber hinaus ist zu erwähnen, dass jeweils beiderseits der Lochreihe 21 jeweils eine Reihe der dreieckigen Strukturelemente 19 angeordnet ist. Beiderseits der einzelnen Löcher 20 ist also jeweils eines der dreieckigen Strukturelemente 19 angeordnet. Hierbei ist auch noch zu erwähnen, dass sich die einzelnen Strukturelemente 19 von innen nach außen verjüngen, wie auch aus der Zeichnung ersichtlich ist.

Die Höhe der einzelnen Strukturelemente 19 kann hierbei konstant sein oder jeweils von innen nach außen zunehmen oder abnehmen.

Figur 7 zeigt eine Abwandlung von Figur 6, so dass zur Vermeidung von Wiederholungen auf die vorstehende Beschreibung verwiesen wird, wofür für entsprechende Einzelheiten dieselben Bezugszeichen verwendet werden.

Eine Besonderheit dieses Ausführungsbeispiels besteht darin, dass die dreieckigen Strukturelemente 19 jeweils zwischen den benachbarten Löchern 20 der Dichtungsmembran 14 angeordnet sind. Die Löcher 20 und die Strukturelemente 19 liegen hierbei also alle innerhalb der Lochreihe 21.

Darüber hinaus ist zu erwähnen, dass die einzelnen Strukturelemente 19 hierbei mit ihrer Längsachse parallel zu der Lochreihe 21 ausgerichtet sind.

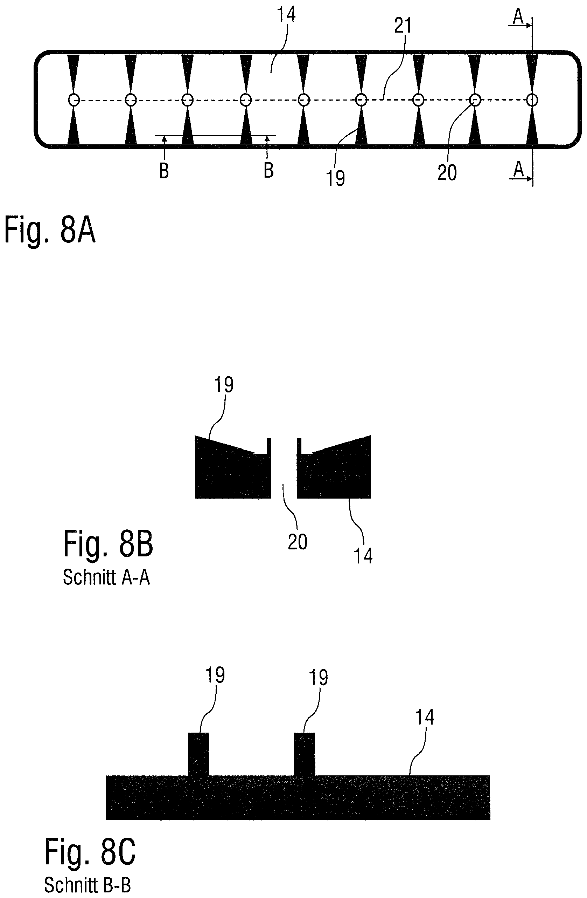

Die Figuren 8A-8C zeigen eine Abwandlung des Ausführungsbeispiels gemäß Figur 6, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht zunächst darin, dass sich die dreieckigen Strukturelemente 19 von innen nach außen hin erweitern.

Eine weitere Besonderheit dieses Ausführungsbeispiels besteht darin, dass die Höhe der dreieckigen Strukturelemente 19 von innen nach außen zunimmt, wie aus Figur 8B ersichtlich ist.

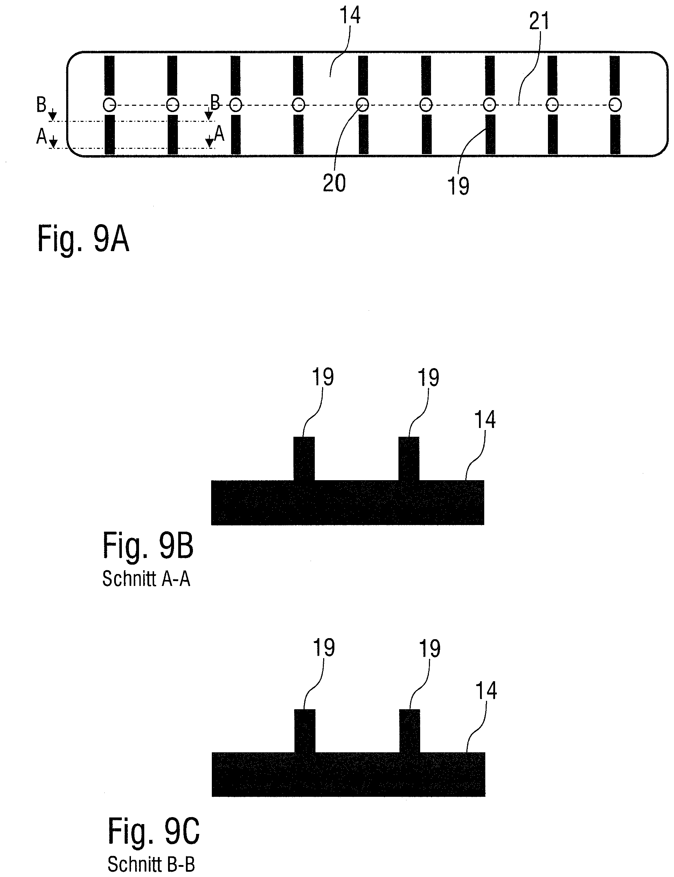

Die Figuren 9A-9C zeigen eine weitere Abwandlung, die ebenfalls mit den vorstehend beschriebenen Ausführungsbeispielen weitgehend übereinstimmt, so dass zur Vermeidung von Wiederholungen auf die vorstehende Beschreibung Bezug genommen wird, wobei für entsprechende Einzelheiten dieselben Bezugszeichen verwendet werden.

Eine Besonderheit dieses Ausführungsbeispiels besteht zunächst darin, dass die dreidimensionalen Strukturelemente 19 als Rippen geformt sind.

Darüber hinaus ist zu erwähnen, dass die als Rippen geformten dreidimensionalen Strukturelemente 19 hierbei eine konstante Höhe aufweisen können, wie aus dem Vergleich der Figuren 9B und 9C ersichtlich ist. Sie können jedoch auch eine nach außen ansteigende oder abfallende Höhe aufweisen.

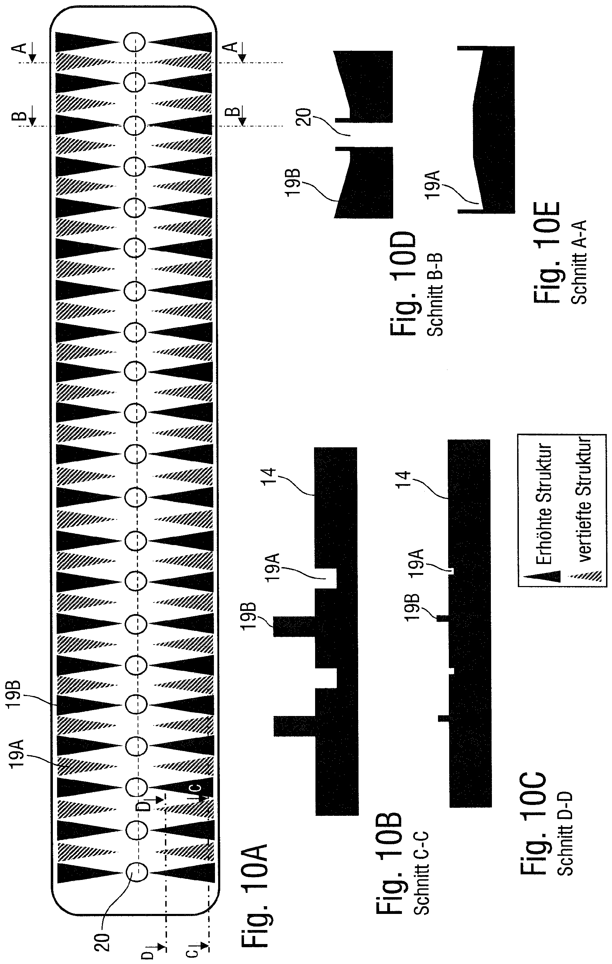

Die Figuren 10A-10E zeigen eine weitere Abwandlung, die wiederum weitgehend mit den vorstehend beschriebenen Ausführungsbeispielen übereinstimmt, so dass zur Vermeidung von Wiederholungen wieder auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die dreidimensionale Strukturierung der Dichtungsmembran 14 verschiedene Typen von Strukturelementen 19A, 19B aufweist. Bei den Strukturelementen 19A handelt es sich um Vertiefungen, während die Strukturelemente 19B Erhebungen sind.

Die beiden Strukturelemente 19A, 19B sind hierbei jedoch ebenfalls dreieckig und verjüngen sich in der Dichtungsmembran 14 nach innen zu der Längsachse der Lochreihe 21 hin.

Darüber hinaus ist zu erwähnen, dass die Höhe der Strukturelemente 19B von außen nach innen abnimmt. In ähnlicher Weise nimmt die Tiefe der Strukturelemente 19A hierbei von innen nach außen zu, wie beispielsweise aus Figur 10E und Figur 10D ersichtlich ist.

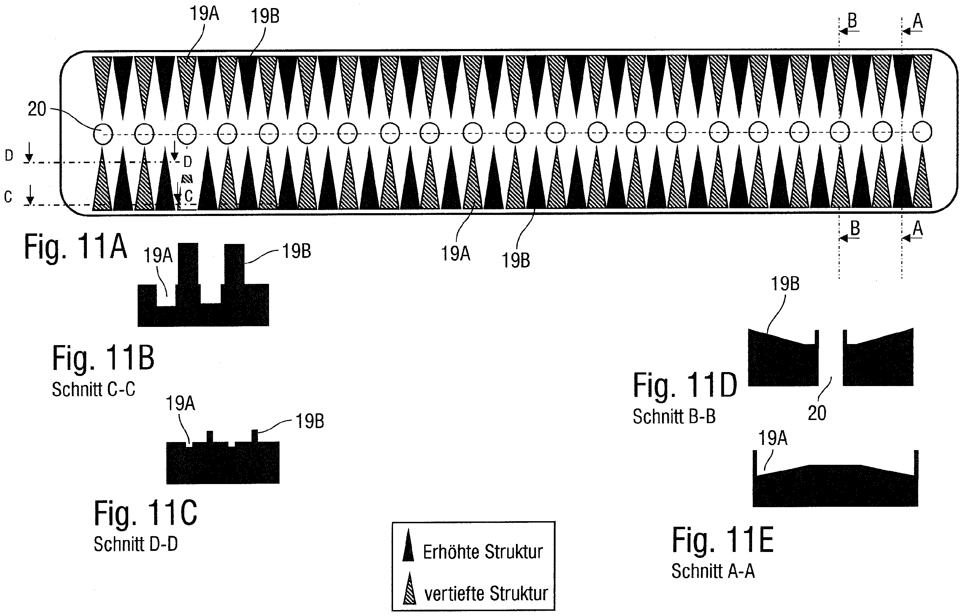

Die Figuren 11A-11E zeigen eine Abwandlung der Ausgestaltung gemäß den Figuren 10A-10E, so dass zur Vermeidung von Wiederholungen hierbei wieder auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die als Vertiefungen ausgeführten Strukturelemente 19A hierbei jeweils beiderseitig der Löcher 20 angeordnet sind, wohingegen die als Anhebung ausgeführten Strukturelemente 19B jeweils zwischen zwei benachbarten Löchern 20 der Lochreihe 21 angeordnet sind.

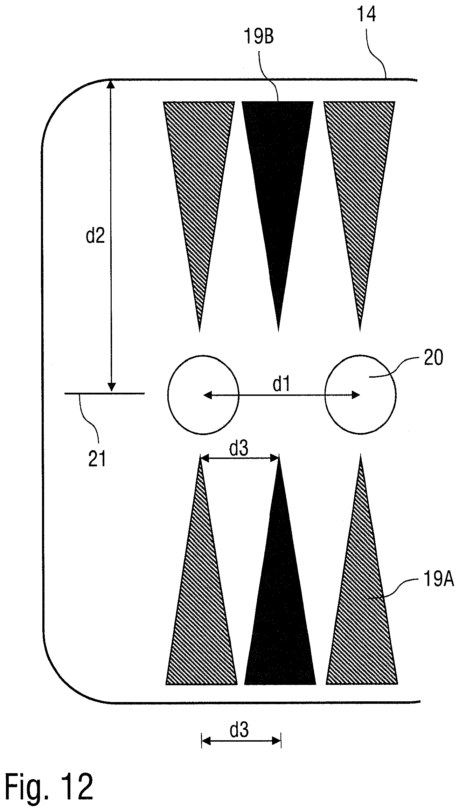

Figur 12 zeigt eine Detailvergrößerung aus Figur 11A. Hierbei zeigt die Zeichnung zunächst einen Abstand d1 zwischen den benachbarten Löchern. Darüber hinaus zeigt die Zeichnung einen Abstand d2 zwischen der Lochreihe 21 und dem Rand der Dichtungsmembran 14. Ferner zeigt die Zeichnung einen Abstand d3 zwischen den benachbarten Strukturelementen 19A, 19B.

Vorzugsweise gelten hierbei folgende Maßverhältnisse:

$$d1/d3 \geq 1;2;3;4$$

im Wesentlichen =1;2;3;4

$$d2/d1 \geq 1;3;5;10$$

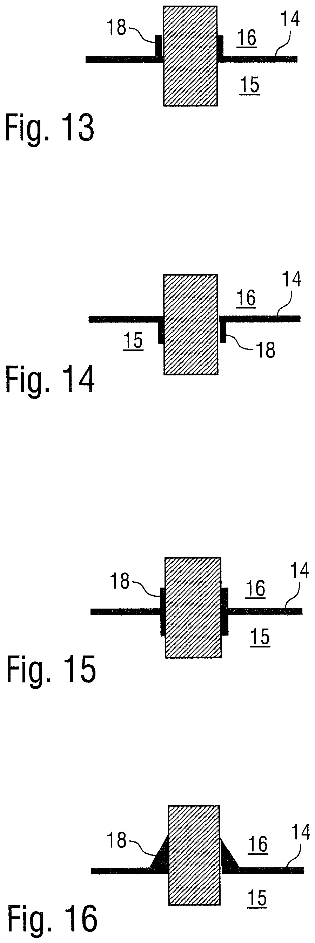

Schließlich zeigen die Figuren 13-16 verschiedene mögliche Ausgestaltungen des Dichtungskragens 18.

Bei Figur 13 steht der Dichtungskragen 18 nur in einer Richtung von der Dichtungsmembran 14 ab, nämlich zu dem Aktorraum 16 hin.

Bei der Ausgestaltung gemäß Figur 14 steht der Dichtungskragen 18 ebenfalls nur in einer Richtung von der Dichtungsmembran 14 ab, allerdings in Richtung des Düsenraums 15.

Bei der Ausgestaltung gemäß Figur 15 steht der Dichtungskragen 18 dagegen in beiden Richtungen von der Dichtungsmembran 14 ab.

Schließlich zeigt Figur 16 einen Dichtungskragen 18 mit einem dreieckigen Querschnitt. Dieser kann sowohl in Richtung des Aktorraums 16 als auch in den Düsenraum 15 zeigen.

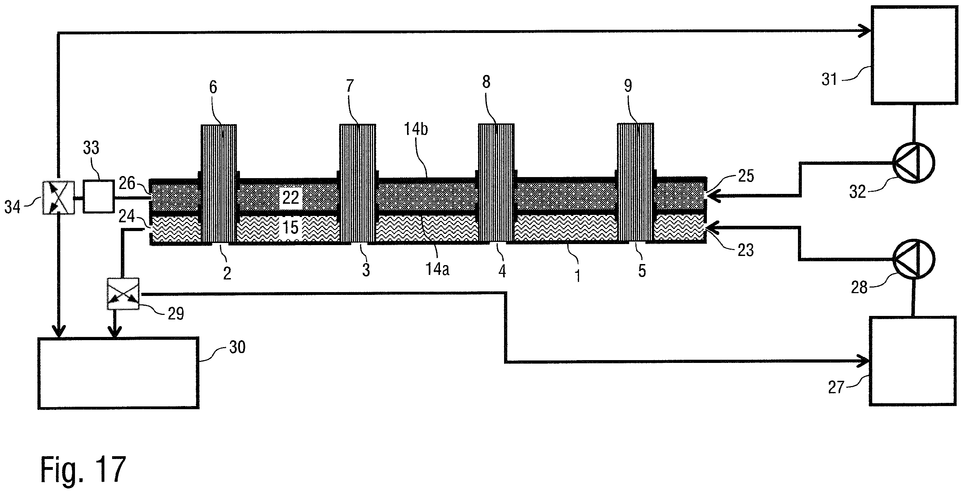

Figur 17 zeigt eine erfindungsgemäße Applikationsanlage mit einem erfindungsgemäßen Applikationskopf, der teilweise mit den vorstehend beschriebenen Ausführungsbeispielen übereinstimmt. Zur Vermeidung von Wiederholungen wird deshalb auf die vorstehende Beschreibung verwiesen, wobei für entsprechende Einzelheiten dieselben Bezugszeichen verwendet werden.

Eine Besonderheit des Applikators besteht in diesem Ausführungsbeispiel darin, dass zwei Dichtungsmembranen 14a, 14b vorgesehen sind.

Die Dichtungsmembran 14a ist hierbei düsenseitig angeordnet und entspricht im Wesentlichen der Dichtungsmembran 14 bei den vorangegangenen Ausführungsbeispielen. Die Dichtungsmembran 14a schließt also den Düsenraum 15 ein.

Die zweite Dichtungsmembran 14b ist dagegen aktorseitig angeordnet und schließt zusammen mit der düsenseitigen Dichtungsmembran 14a einen Fluidraum 22 ein.

Zur Einleitung des zu applizierenden Lacks in dem Applikator weist der Applikator einen Beschichtungsmitteleinlass 23 auf.

Darüber hinaus weist der Applikator einen Beschichtungsmittelauslass 24 auf, wobei nicht appliziertes Beschichtungsmittel beispielsweise im Rahmen einer Materialzirkulation wieder aus dem Applikator ausgeleitet werden kann.

Ferner weist der Applikator einen Sperrfluideinlass 25 auf, um ein Sperrfluid (z.B. Druckluft, wasserbasiertes Spülmittel, organisches Lösemittel) in den Fluidraum 22 einzuleiten.

Das Sperrfluid kann dann durch eine Sperrfluidauslass 26 wieder aus dem Applikator austreten.

Der zu applizierende Lack wird hierbei aus einem Lackbehälter 27 entnommen und mittels einer Pumpe 28 in dem Beschichtungsmitteleinlass 23 des Applikators eingespeist. Der eingespeiste Lack verlässt den Applikator dann entweder über die Düsen 2-5 oder im Rahmen einer Materialzirkulation durch den Beschichtungsmittelauslass 24.

An den Beschichtungsmittelauslass 24 ist ein steuerbares Ventil 29 angeschlossen, wobei das Ventil 29 das austretende Beschichtungsmittel wahlweise in einen Abfallbehälter 30 oder im Rahmen einer Materialzirkulation zurück in den Lackbehälter 27 leitet.

Das Sperrfluid wird hierbei von einer Sperrfluidquelle 31 entnommen und über eine Pumpe 32 in den Sperrfluideinlass 25 des Applikators eingespeist.

Das Sperrfluid verlässt den Applikator dann wieder über den Sperrfluidauslass 26 zu einem Drucksensor 33, der den Sperrfluiddruck in dem Fluidraum 22 misst und dadurch eine Leckageerkennung ermöglicht.

Das austretende Sperrfluid wird dann von einem steuerbaren Ventil 34 wahlweise in den Abfallbehälter 30 oder im Rahmen einer Materialzirkulation zurück zu der Sperrfluidquelle 31 geleitet.

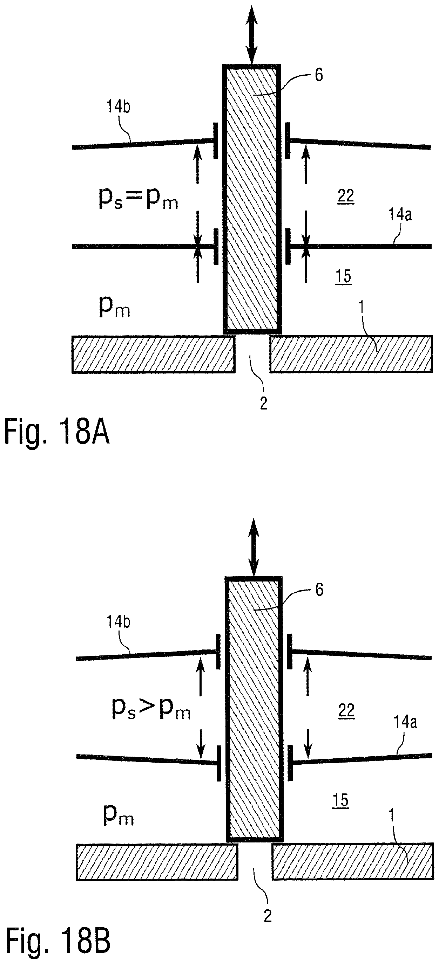

Die Figuren 18A und 18B zeigen verschiedene Druckverhältnisse in dem Düsenraum 15 einerseits und in dem Fluidraum 22 andererseits.

So ist der Sperrfluiddruck $p_s$ in dem Fluidraum 22 in Figur 18 A gleich dem Beschichtungsmitteldruck $p_m$ in dem Düsenraum 15. Dies bedeutet, dass der Sperrfluiddruck $p_s$ in dem Fluidraum 22 den Beschichtungsmitteldruck $p_m$ in dem Düsenraum 15 kompensiert, so dass auf die Dichtungsmembran 14a keine druckbedingten Kräfte wirken.

In dem Zustand gemäß Figur 18B ist der Sperrfluiddruck $p_s$ in dem Fluidraum 22 dagegen größer als der Beschichtungsmitteldruck $p_m$ in dem Düsenraum 15. Dies hat zur Folge, dass der Druckunterschied eine Auslenkungskraft auf die Dichtungsmembran 14a ausübt, welche wiederum die Ventilnadel 6 in eine Schließstellung vorspannt, d.h. in der Zeichnung nach unten.

Bezugszeichenliste:

| | |
|---|---|
| 1 | Düsenplatte |
| 2-5 | Düsen |
| 6-9 | Ventilnadeln |
| 10-13 | Aktoren |
| 14 | Dichtungsmembran |
| 14a, 14b | Dichtungsmembranen |
| 15 | Düsenraum |
| 16 | Aktorraum |
| 17 | Düsenverschlussspitze |
| 18 | Dichtungskragen |
| 19, 19A, 19B | Strukturelemente der dreidimensionalen Strukturierung der Dichtungsmembran |
| 20 | Löcher in der Dichtungsmembran |
| 21 | Lochreihe |
| 22 | Fluidraum des Applikators |
| 23 | Beschichtungsmitteleinlass des Applikators |
| 24 | Beschichtungsmittelauslass des Applikators |
| 25 | Sperrfluideinlass des Applikators |
| 26 | Sperrfluidauslass des Applikators |
| 27 | Lackbehälter |
| 28 | Pumpe zur Förderung des Lacks |
| 29 | Ventil am Beschichtungsmittelauslass des Applikators |
| 30 | Abfallbehälter |
| 31 | Sperrfluidquelle |
| 32 | Pumpe zur Förderung des Sperrfluids |
| 33 | Drucksensor am Sperrfluidauslass des Applikators |
| 34 | Ventil am Sperrfluidauslass des Applikators |
| $p_m$ | Lackdruck im Düsenraum |
| $P_S$ | Sperrfluiddruck im Fluidraum |

**Patentansprüche**

1. Applikator, insbesondere Druckkopf, zur Applikation eines Beschichtungsmittels, insbesondere eines Lacks, auf ein Bauteil, insbesondere auf ein Kraftfahrzeugkarosseriebauteil, mit

a) einem Düsenraum (15) mit mehreren Düsen (2-5) zur Abgabe des Beschichtungsmittels in Form von kontinuierlichen Strahlen oder Tröpfchen, wobei das Beschichtungsmittel im Betrieb durch den Düsenraum (15) zu den Düsen (2-5) strömt, so dass der Düsenraum (15) im Betrieb mit dem Beschichtungsmittel gefüllt ist,

b) mehreren verschiebbaren Ventilnadeln (6-9), die den einzelnen Düsen (2-5) zugeordnet sind und die jeweilige Düse (2-5) in Abhängigkeit von der Stellung der Ventilnadel (6-9) wahlweise öffnen oder verschließen,

c) einem Aktorraum (16) zur Aufnahme von Aktoren (10-13) zum Verschieben der Ventilnadeln (6-9), und

d) einem Dichtelement (14), insbesondere einer Dichtungsmembran (14), das den Aktorraum (16) von dem Düsenraum (15) fluidisch trennt, um eine Verschmutzung des Aktorraums (16) mit dem Beschichtungsmittel in dem Düsenraum (15) zu vermeiden,

d1) wobei das Dichtelement (14) so ausgebildet ist, dass die einzelnen Ventilnadeln (6-9) unabhängig voneinander verschoben werden können, ohne dass eine Verschiebung einer der Ventilnadeln (6-9) das Öffnen und Verschließen der Düsen (2-5) bei der benachbarten Ventilnadel (6-9) beeinträchtigt,

d2) wobei das Dichtelement (14) eine dreidimensionale Strukturierung (19; 19A, 19B) aufweist, die verhindert, dass eine Verschiebung einer der Ventilnadeln (6-9) das Öffnen und Schließen der Düsen (2-5) bei den benachbarten Ventilnadeln (6-9) beeinträchtigt,

**dadurch gekennzeichnet,**
e) **dass** das Dichtelement (14) mindestens eine Lochreihe (21) von Löchern (20) für die einzelnen Ventilnadeln (6-9) aufweist.

2. Applikator nach Anspruch 1, **dadurch gekenn-**

**zeichnet,**

a) **dass** sich die dreidimensionale Strukturierung (19; 19A, 19B) des Dichtelements (14) nur auf der Seite des Aktorraums (16) befindet, oder
b) **dass** sich die dreidimensionale Strukturierung (19; 19A, 19B) des Dichtelements (14) nur auf der Seite des Düsenraums (15) befindet, oder
c) **dass** sich die dreidimensionale Strukturierung (19; 19A, 19B) des Dichtelements (14) sowohl auf der Seite des Düsenraums (15) als auch auf der Seite des Aktorraums (16) befindet.

3. Applikator nach Anspruch 1 oder 2, **dadurch gekennzeichnet,**

a) **dass** die dreidimensionale Strukturierung (19; 19A, 19B) mindestens eines der folgenden Strukturelemente (19; 19A, 19B) enthält:

a1) Kubus,
a2) Quader,
a3) Tetraeder
a4) Prisma,
a5) Rippe,
a6) Vertiefung, und

b) **dass** die einzelnen Strukturelemente in einer Aufsicht auf das Dichtelement (14) mindestens eine der folgenden Formen haben:

b1) quadratisch,
b2) rechteckig, insbesondere bei einer Rippe,
b3) dreieckig, insbesondere bei einer Rippe,
b4) parallelogrammförmig,
b5) rundbogenförmig, insbesondere bei einer Rippe.
b6) kreisförmig
b7) ellipsenförmig

4. Applikator nach Anspruch 3, **dadurch gekennzeichnet,**

a) **dass** die einzelnen Strukturelemente (19; 19A, 19B) der dreidimensionalen Strukturierung (19; 19A, 19B) jeweils langgestreckt sind und mit ihrer Längsachse jeweils parallel oder quer, insbesondere rechtwinklig, zu der Lochreihe (21) ausgerichtet sind, und/oder
b) **dass** die einzelnen Strukturelemente (19; 19A, 19B) der dreidimensionalen Strukturierung (19; 19A, 19B) in mindestens einer Reihe parallel zu der Lochreihe (21) angeordnet sind, insbesondere

b1) in der Lochreihe (21) jeweils zwischen benachbarten Löchern (20),
b2) seitlich beabstandet parallel zu der Lochreihe (21), insbesondere beiderseits der Lochreihe (21) jeweils in einer Linie mit jeweils einem der Löcher (20).

5. Applikator nach einem der Ansprüche 3 bis 4, **dadurch gekennzeichnet, dass**

a) dass die Höhe der Strukturelemente (19; 19A, 19B) rechtwinklig zu dem Dichtelement (14) innerhalb der einzelnen Strukturelemente (19; 19A, 19B) im Wesentlichen konstant ist, oder
b) dass die Höhe der Strukturelemente (19; 19A, 19B) rechtwinklig zu dem Dichtelement (14) innerhalb der einzelnen Strukturelemente (19; 19A, 19B) variiert.

6. Applikator nach einem der vorhergehenden Ansprüche, **dadurch gekennzeichnet,**

a) **dass** das Dichtelement (14) um die einzelnen Löcher (20) jeweils eine ringförmige Auswölbung aufweist, und
b) **dass** die ringförmigen Auswölbungen in dem Dichtelement (14) wie folgt angeordnet sind:

b1) nur auf der Seite des Aktorraums (16) angeordnet, oder
b2) nur auf der Seite des Düsenraums (15) angeordnet, oder
b3) sowohl auf der Seite des Aktorraums (16) als auch auf der Seite des Düsenraums (15).

7. Applikator nach einem der vorhergehenden Ansprüche, **dadurch gekennzeichnet,**

a) **dass** das Dichtelement (14) am Umfangsrand der Löcher (20) jeweils einen Dichtungskragen (18) aufweist, um das jeweilige Loch (20) abzudichten, und
b) **dass** der Dichtungskragen (18)

b1) nur zu dem Aktorraum (16) hin von dem Dichtelement (14) absteht,
b2) nur zu dem Düsenraum (15) hin von dem Dichtelement (14) absteht, oder
b3) sowohl zu dem Düsenraum (15) hin als auch zu dem Aktorraum (16) hin von dem Dichtelement (14) absteht, und

c) **dass** der Dichtungskragen (18) im Querschnitt dreieckig oder rechteckig ist.

8. Applikator nach einem der vorhergehenden Ansprüche, **dadurch gekennzeichnet,**

a) **dass** die einzelnen Ventilnadeln (6-9) jeweils durch eine Pressverbindung mit einer bestimmten Anpresskraft in den Löchern (20) des Dichtelements (14) gehalten werden, und

b) **dass** die Anpresskraft so bemessen ist, dass

b1) die Ventilnadeln (6-9) in den Löchern (20) des Dichtelements (14) axial fixiert sind und nicht in den Löchern (20) des Dichtelements (14) axial gleiten, so dass eine Verschiebung einer der Ventilnadeln (6-9) zu einer entsprechenden Auslenkung des Dichtelements (14) führt, oder

b2) die Ventilnadeln (6-9) in den Löchern (20) des Dichtelements (14) axial frei gleiten, so dass eine Verschiebung einer der Ventilnadeln (6-9) nicht zu einer entsprechenden Auslenkung des Dichtelements (14) führt, oder

b3) die Ventilnadeln (6-9) in den Löchern (20) des Dichtelements (14) teilweise frei gleiten und teilweise axial fixiert sind, so dass eine Verschiebung einer der Ventilnadeln (6-9) auf einem Teil der Bewegung der Ventilnadel (6-9) nicht zu einer entsprechenden Auslenkung des Dichtelements (14) führt und auf einem anderen Teil der Bewegung der Ventilnadel (6-9) zu einer entsprechenden Auslenkung des Dichtelements (14) führt.

9. Applikator nach einem der vorhergehenden Ansprüche, **dadurch gekennzeichnet,**

a) **dass** das Dichtelement (14) mehrlagig und/oder redundant aufgebaut ist, und

b) **dass** zwischen den Lagen des Dichtelements (14) eine Leckagebohrung aus dem Applikator ausmündet, um eine Leckage einer der Lagen erkennen zu können, und

c) **dass** die Leckagebohrung mit einem Sensor verbunden ist, der eine Leckage aufgrund eines Beschichtungsmittelaustritts durch die Leckagebohrung erkennt, und

d) **dass** die Leckagebohrung in ein Schauglas oder in einen durchsichtigen Schlauch mündet, um eine Leckage optisch sichtbar zu machen.

10. Applikator nach einem der vorhergehenden Ansprüche, **dadurch gekennzeichnet,**

a) **dass** das Dichtelement (14) für die einzelnen Ventilnadeln (6-9) jeweils ein Loch (20) aufweist, und

b) **dass** die einzelnen Ventilnadeln (6-9) jeweils durch das zugehörige Loch (20) in dem Dichtelement (14) durchgeführt sind und fest und fluidisch dicht mit dem Dichtelement (14) verbunden sind, so dass eine Verschiebung der einzelnen Ventilnadeln (6-9) zu einer entsprechenden Auslenkung des Dichtelements (14) führt.

11. Applikator nach einem der vorhergehenden Ansprüche, **dadurch gekennzeichnet, dass** das Dichtungselement (14) zwischen dem Düsenraum (15) und dem Aktorraum (16) mindestens zwei Membranen (14a, 14b) aufweist, die einen Fluidraum (22) zwischen sich einschließen.

12. Applikator nach Anspruch 11, **gekennzeichnet durch**

a) einen Beschichtungsmitteleinlass (23) zur Zuführung des zu applizierenden Beschichtungsmittels in den Düsenraum (15) des Applikators, und/oder

b) einen Beschichtungsmittelauslass (24) zur Rückführung des nicht applizierten Beschichtungsmittel aus dem Düsenraum (15) des Applikators in eine Beschichtungsmittelrückführung, und/oder

c) einen Sperrfluideinlass (25) zur Zuführung eines Sperrfluids in den Fluidraum (22) zwischen den beiden Membranen (14a, 14b), und/oder

d) einen Sperrfluidauslass (26) zur Rückführung des Sperrfluids aus dem Fluidraum (22) des Applikators in eine Sperrfluidrückführung.

13. Applikationsanlage mit

a) einem Applikator nach Anspruch 12,

b) einer Beschichtungsmittelquelle (27, 28), die das Beschichtungsmittel in den Beschichtungsmitteleinlass (23) des Applikators einspeist, und/oder

c) einer Sperrfluidquelle (31, 32), die das Sperrfluid in den Sperrfluideinlass (25) des Applikators einspeist, und/oder

d) einer Drossel an dem Sperrfluidauslass (26) zur Druckbeeinflussung in dem Fluidraum (22), und/oder

e) einem Beschichtungsmittelventil (29) an dem Beschichtungsmittelauslass (24), wobei das Beschichtungsmittelventil (29) das nicht applizierte Beschichtungsmittel aus dem Applikator wahlweise zur Entsorgung in einen Abfallbehälter (30) oder zur Wiederverwendung zu der Beschichtungsmittelquelle (27) leitet, und/oder

f) einem Sperrfluidventil (34) an dem Sperrfluidauslass (26), wobei das Sperrfluidventil (34) das nicht applizierte Sperrfluid aus dem Applikator wahlweise zur Entsorgung in einen Abfallbehälter (30) oder zur Wiederverwendung zu der Sperrfluidquelle (31) leitet.

14. Applikationsanlage nach Anspruch 13, **dadurch ge-**

**kennzeichnet,**

a) **dass** eine Steuereinrichtung vorgesehen ist zur Steuerung der Befüllung des Fluidraums (22) des Applikators mit dem Sperrfluid, und/
b) **dass** die Steuereinrichtung den Fluidraum (22) jeweils vor Applikationsbeginn einmalig mit dem Sperrfluid befüllt, und
c) **dass** die Steuereinrichtung den Fluidraum (22) zeitgesteuert befüllt, insbesondere

c1) stündlich,
c3) täglich,
c4) wöchentlich,
c5) monatlich.

**Claims**

1. Applicator, in particular print head, for applying a coating agent, in particular a paint, to a component, in particular to a motor vehicle body component, with

a) a nozzle chamber (15) having a plurality of nozzles (2-5) for dispensing the coating agent in the form of continuous jets or droplets, the coating agent flowing in use through the nozzle chamber (15) to the nozzles (2-5) so that the nozzle chamber (15) is filled with the coating agent in use,
b) a plurality of displaceable valve needles (6-9) which are assigned to the individual nozzles (2-5) and selectively open or close the respective nozzle (2-5) as a function of the position of the valve needle (6-9),
c) an actuator chamber (16) for accommodating actuators (10-13) for displacing the valve needles (6-9), and
d) a sealing element (14), in particular a sealing membrane (14), which fluidically separates the actuator chamber (16) from the nozzle chamber (15) in order to avoid contamination of the actuator chamber (16) with the coating agent in the nozzle chamber (15),

d1) wherein the sealing element (14) is designed such that the individual valve needles (6-9) can be displaced independently of one another without a displacement of one of the valve needles (6-9) affecting the opening and closing of the nozzles (2-5) at the adjacent valve needle (6-9),
d2) wherein the sealing element (14) has a three-dimensional structure (19; 19A, 19B) which prevents a displacement of one of the valve needles (6-9) from affecting the opening and closing of the nozzles (2-5) at the adjacent valve needles (6-9),

**characterized in**
e) **that** the sealing element (14) has at least one row of holes (21) of holes (20) for the individual valve needles (6-9).

2. Applicator according to claim 1, **characterized in**

a) **that** the three-dimensional structure (19; 19A, 19B) of the sealing element (14) is located only on the side of the actuator chamber (16), or
b) **that** the three-dimensional structure (19; 19A, 19B) of the sealing element (14) is located only on the side of the nozzle chamber (15), or
c) in that the three-dimensional structure (19; 19A, 19B) of the sealing element (14) is located both on the side of the nozzle chamber (15) and on the side of the actuator chamber (16).

3. Applicator according to claim 1 or 2, **characterized in**

a) **that** the three-dimensional structure (19; 19A, 19B) comprises at least one of the following structural elements (19; 19A, 19B):

a1) cube,
a2) cuboid,
a3) tetrahedron
a4) prism,
a5) rib,
a6) recess, and

b) **that** the individual structural elements of the sealing element (14) have at least one of the following forms in a top view:

b1) square,
b2) rectangular, in particular in the case of a rib,
b3) triangular, in particular in the case of a rib,
b4) parallelogram,
b5) round, in particular in the case of a rib,
b6) circular,
b7) ellipsoidal

4. Applicator according to claim 3, **characterized in**

a) **that** the individual structural elements (19; 19A, 19B) of the three-dimensional structure (19; 19A, 19B) are in each case elongate and are aligned with their longitudinal axis in each case parallel or transversely, in particular at right angles, to the row of holes (21), and/or
b) **that** the individual structural elements (19; 19A, 19B) of the three-dimensional structure (19; 19A, 19B) are arranged in at least one row parallel to the row of holes (21), in particular

b1) in the row of holes (21) between each of the adjacent holes (20),

b2) laterally spaced parallel to the row of holes (21), in particular on both sides of the row of holes (21) in each case in a line with in each case one of the holes (20).

5. Applicator according to one of claims 3 to 4, **characterized in**

a) **that** the height of the structural elements (19; 19A, 19B) is substantially constant perpendicular to the sealing element (14) within the individual structural elements (19; 19A, 19B); or

b) **that** the height of the structural elements (19; 19A, 19B) varies perpendicularly to the sealing element (14) within the individual structural elements (19; 19A, 19B).

6. Applicator according to one of the preceding claims, **characterized in**

a) **that** the sealing element (14) has an annular bulge around each of the individual holes (20), and

b) **that** the annular bulges are arranged in the sealing element (14) as follows:

b1) arranged only on the side of the actuator chamber (16), or

b2) arranged only on the side of the nozzle chamber (15), or

b3) both on the side of the actuator chamber (16) and on the side of the nozzle chamber (15).

7. Applicator according to one of the preceding claims, **characterized in**

a) **that** the sealing element (14) has, at the circumferential edge of the holes (20), in each case a sealing collar (18) in order to seal the respective hole (20), and

b) **that** the sealing collar (18)

b1) projects only towards the actuator chamber (16) from the sealing element (14),

b2) projects only towards the nozzle chamber (15) from the sealing element (14), or

b3) projects both towards the nozzle chamber (15) and towards the actuator chamber (16) from the sealing element (14), and

c) **that** the sealing collar (18) is triangular or rectangular in cross section.

8. Applicator according to one of the preceding claims, **characterized in**

a) **that** the individual valve needles (6-9) are each held in the holes (20) of the sealing element (14) by a press connection with a predetermined contact force, and

b) **that** the contact pressure is such that

b1) the valve needles (6-9) are axially fixed in the holes (20) of the sealing member (14) and do not slide axially in the holes (20) of the sealing member (14) so that displacement of one of the valve needles (6-9) results in corresponding deflection of the sealing member (14), or

b2) the valve needles (6-9) slide axially freely in the holes (20) of the sealing member (14) so that displacement of one of the valve needles (6-9) does not result in corresponding deflection of the sealing member (14), or

b3) the valve needles (6-9) slide partially freely in the holes (20) of the sealing element (14) and are partially axially fixed, so that a displacement of one of the valve needles (6-9) on one part of the movement of the valve needle (6-9) does not lead to a corresponding deflection of the sealing element (14) and on another part of the movement of the valve needle (6-9) leads to a corresponding deflection of the sealing element (14).

9. Applicator according to one of the preceding claims, **characterized in**

a) **that** the sealing element (14) has a multi-layer and/or redundant structure, and

b) **that** a leakage bore opens out of the applicator between the layers of the sealing element (14) in order to be able to detect a leakage of one of the layers, and

c) **that** the leakage bore is connected to a sensor which detects a leakage due to a coating agent escaping through the leakage bore; and

d) **that** the leakage bore opens into a sight glass or a transparent tube to make a leakage optically visible.

10. Applicator according to one of the preceding claims, **characterized in**

a) **that** the sealing element (14) for the individual valve needles (6-9) each has a hole (20), and

b) **that** the individual valve needles (6-9) are each passed through the associated hole (20) in the sealing element (14) and are firmly and fluidically tightly connected to the sealing element (14), so that a displacement of the individual valve needles (6-9) leads to a corresponding deflection of the sealing element (14).

**11.** Applicator according to one of the preceding claims, **characterized in that** the sealing element (14) between the nozzle chamber (15) and the actuator chamber (16) comprises at least two membranes (14a, 14b) enclosing a fluid space (22) between them.

**12.** Applicator according to claim 11, **characterized by**

    a) a coating agent inlet (23) for supplying the coating agent to be applied into the nozzle chamber (15) of the applicator, and/or
    b) a coating agent outlet (24) for returning the non-applied coating agent from the nozzle chamber (15) of the applicator to a coating agent return, and/or
    c) a barrier fluid inlet (25) for supplying a barrier fluid into the fluid space (22) between the two membranes (14a, 14b), and/or
    d) a barrier fluid outlet (26) for returning the barrier fluid from the fluid space (22) of the applicator to a barrier fluid return.

**13.** Application system with

    a) an applicator according to Claim 12,
    b) a coating agent source (27, 28) which feeds the coating agent into the coating agent inlet (23) of the applicator, and/or
    c) a barrier fluid source (31, 32) which feeds the barrier fluid into the barrier fluid inlet (25) of the applicator, and/or
    d) a throttle at the barrier fluid outlet (26) for influencing the pressure in the fluid space (22), and/or
    e) a coating agent valve (29) at the coating agent outlet (24), the coating agent valve (29) directing the unapplied coating agent from the applicator selectively to a waste container (30) for disposal or to the coating agent source (27) for reuse; and/or
    f) a barrier fluid valve (34) at the barrier fluid outlet (26), the barrier fluid valve (34) directing the unapplied barrier fluid from the applicator selectively to a waste container (30) for disposal or to the barrier fluid source (31) for reuse.

**14.** Application system according to claim 13, **characterized in**

    a) **that** a control device is provided for controlling the filling of the fluid space (22) of the applicator with the barrier fluid, and
    b) **that** the control device fills the fluid space (22) once with the barrier fluid in each case before the start of application, and
    c) **that** the control device fills the fluid space (22) in a time-controlled manner, in particular

    c1) hourly,
    c3) daily,
    c4) weekly,
    c5) monthly.

## Revendications

**1.** Applicateur, plus particulièrement tête d'impression, pour l'application d'un produit de revêtement, plus particulièrement d'une peinture, sur un composant, plus particulièrement sur un composant de carrosserie de véhicule automobile, avec

    a) un espace de buses (15) avec plusieurs buses (2-5) pour la distribution du produit de revêtement sous la forme de jets continus ou de gouttelettes, dans lequel le produit de revêtement s'écoule, lors du fonctionnement, à travers l'espace de buses (15), vers les buses (2-5), de façon à ce que, pendant le fonctionnement, l'espace de buses (15) soit rempli de produit de revêtement,
    b) plusieurs pointeaux (6-9) qui correspondent aux différentes buses (2-5) et qui ouvrent ou ferment la buse (2-5) respective en fonction de la position des pointeaux (6-9),
    c) un espace d'actionneurs (16) pour le logement d'actionneurs (10-13), pour le déplacement des pointeaux (6-9) et
    d) un élément d'étanchéité (14), plus particulièrement une membrane d'étanchéité (14), qui sépare fluidiquement l'espace d'actionneurs (16) de l'espace de buses (15), afin d'éviter un encrassement de l'espace d'actionneurs (16) avec le produit de revêtement dans l'espace de buses (15),

    d1) dans lequel l'élément d'étanchéité (14) est conçu de façon à ce que les différents pointeaux (6-9) peuvent être déplacés indépendamment les uns des autres sans qu'un déplacement d'un des pointeaux (6-9) n'affecte l'ouverture et la fermeture des buses (2-5) au niveau des pointeaux (6-9) adjacents,
    d2) dans lequel l'élément d'étanchéité (14) présente une structure tridimensionnelle (19 ; 19A, 19B) qui empêche qu'un déplacement d'un des pointeaux (6-9) n'affecte l'ouverture et la fermeture des buses (2-5) au niveau des pointeaux (6-9) adjacents,

    **caractérisé en ce que**
    e) l'élément d'étanchéité (14) comprend au moins une série (21) de trous (20) pour les différents pointeaux (6-9).

**2.** Applicateur selon la revendication 1, **caractérisé en ce que**

> a) la structure tridimensionnelle (19 ; 19A, 19B) de l'élément d'étanchéité (14) se trouve uniquement sur le côté de l'espace d'actionneurs (16) ou
> b) la structure tridimensionnelle (19 ; 19A, 19B) de l'élément d'étanchéité (14) se trouve uniquement sur le côté de l'espace de buses (15) ou
> c) la structure tridimensionnelle (19 ; 19A, 19B) de l'élément d'étanchéité (14) se trouve aussi bien sur le côté de l'espace de buses (15) que sur le côté de l'espace d'actionneurs (16).

**3.** Applicateur selon la revendication 1 ou 2, **caractérisé en ce que**

> a) la structure tridimensionnelle (19 ; 19A, 19B) contient au moins un des éléments structurels (19 ; 19A, 19B) suivants :
>
> > a1) cube,
> > a2) parallélépipède,
> > a3) tétraèdre,
> > a4) prisme,
> > a5) nervure,
> > a6) cavité et
>
> b) les différents éléments structurels présentent, en vue de dessus de l'élément d'étanchéité (14), au moins une des formes suivantes :
>
> > b1) carrée,
> > b2) rectangulaire, plus particulièrement pour une nervure,
> > b3) triangulaire, plus particulièrement pour une nervure,
> > b4) forme de parallélogramme,
> > b5) forme d'arc de cercle, plus particulièrement pour une nervure,
> > b6) circulaire
> > b7) elliptique.

**4.** Applicateur selon la revendication 3, **caractérisé en ce que**

> a) les différents éléments structurels (19 ; 19A, 19B) de la structure tridimensionnelle (19 ; 19A, 19B) sont allongés et sont orientés, avec leur axe longitudinal, parallèlement ou transversalement, plus particulièrement perpendiculairement, à la série de trous et/ou
> b) les différents éléments structurels (19 ; 19A, 19B) de la structure tridimensionnelle (19 ; 19A, 19B) sont disposés dans au moins une rangée parallèle à la série de trous (21), plus particulièrement

> b1) dans la série de trous (21) respectivement entre des trous (20) adjacents,
> b2) latéralement, distants et parallèles à la série de trous (21), plus particulièrement des deux côtés de la série de trous (21) respectivement sur une ligne avec respectivement un des trous (20).

**5.** Applicateur selon l'une des revendications 3 à 4, **caractérisé en ce que**

> a) la hauteur des éléments structurels (19 ; 19A, 19B) perpendiculairement à l'élément d'étanchéité (14) à l'intérieur des différents éléments structurels (19 ; 19A, 19B) est globalement constante ou
> b) la hauteur des éléments structurels (19 ; 19A, 19B) perpendiculairement à l'élément d'étanchéité (14) à l'intérieur des différents éléments structurels (19 ; 19A, 19B) est variable.

**6.** Applicateur selon l'une des revendications précédentes, **caractérisé en ce que**

> a) l'élément d'étanchéité (14) présente, autour des différents trous (20), respectivement une convexité annulaire et
> b) les convexités annulaires dans l'élément d'étanchéité (14) sont disposées comme suit :
>
> > b1) uniquement sur le côté de l'espace d'actionneurs (16) ou
> > b2) uniquement sur le côté de l'espace de buses (15) ou
> > b3) aussi bien sur le côté de l'espace d'actionneurs (16) que sur le côté de l'espace de buses (15).

**7.** Applicateur selon l'une des revendications précédentes, **caractérisé en ce que**

> a) l'élément d'étanchéité (14) présente, sur le bord circonférentiel des trous (20), respectivement une collerette d'étanchéité (18) afin d'étanchéifier le trou (20) correspondant et
> b) la collerette d'étanchéité (18)
>
> > b1) s'étend uniquement vers l'espace d'actionneurs (16) à partir de l'élément d'étanchéité (14),
> > b2) s'étend uniquement vers l'espace de buses (15) à partir de l'élément d'étanchéité (14) ou
> > b3) s'étend aussi bien vers l'espace de buses (15) que vers l'espace d'actionneurs (16) à partir de l'élément d'étanchéité (14) et
>
> c) la collerette d'étanchéité (18) présente une section triangulaire ou rectangulaire.

**8.** Applicateur selon l'une des revendications précédentes, **caractérisé en ce que**

a) les différents pointeaux (6-9) sont maintenus chacun par une liaison par pression avec une force de pression déterminée dans les trous (20) de l'élément d'étanchéité (14) et
b) la force de pression est dimensionnée de façon à ce que

b1) les pointeaux (6-9) soient fixés axialement dans les trous (20) de l'élément d'étanchéité (14) et ne glissent pas axialement dans les trous (20) de l'élément d'étanchéité (14), de sorte que le déplacement d'un des pointeaux (6-9) ne provoque pas une déviation correspondante de l'élément d'étanchéité (14) ou
b2) les pointeaux (6-9) glissent axialement librement dans les trous (20) de l'élément d'étanchéité (14), de sorte que le déplacement d'un des pointeaux (6-9) ne provoque pas une déviation correspondante de l'élément d'étanchéité (14) ou
b3) les pointeaux (6-9) glissent axialement partiellement librement dans les trous (20) de l'élément d'étanchéité (14) et soient fixés partiellement axialement, de sorte que le déplacement d'un des pointeaux (6-9) sur une partie du déplacement des pointeaux (6-9) ne provoque pas une déviation correspondante de l'élément d'étanchéité (14) et, sur une autre partie du déplacement des pointeaux (6-9), provoque une déviation correspondante de l'élément d'étanchéité (14).

**9.** Applicateur selon l'une des revendications précédentes, **caractérisé en ce que**

a) l'élément d'étanchéité (14) présente plusieurs couches et/ou est conçu de façon redondante et
b) entre les couches de l'élément d'étanchéité (14), débouche un alésage de fuite à partir de l'applicateur, afin de pouvoir détecter une fuite d'une des couches et
c) l'élément d'étanchéité (14) est relié à un capteur qui détecte une fuite sur la base d'une sortie de produit de revêtement à travers l'alésage de fuite et
d) l'alésage de fuite débouche dans un regard ou dans un tuyau transparent afin de rendre une fuite visible optiquement.

**10.** Applicateur selon l'une des revendications précédentes, **caractérisé en ce que**

a) l'élément d'étanchéité (14) comprend un trou (20) pour chacun des différents pointeaux (6-9) et
b) les différents pointeaux (6-9) sont guidés à travers le trou (20) correspondant dans l'élément d'étanchéité (14) et sont reliés de manière fixe et fluidiquement étanche avec l'élément d'étanchéité (14), de façon à ce que le déplacement des différents pointeaux (6-9) provoque une déviation correspondante de l'élément d'étanchéité (14).

**11.** Applicateur selon l'une des revendications précédentes, **caractérisé en ce que** l'élément d'étanchéité (14) comprend, entre l'espace de buses (15) et l'espace d'actionneurs (16), au moins deux membranes (14a, 14b) qui incluent entre elles un espace de fluide (22).

**12.** Applicateur selon la revendication 11, **caractérisé par**

a) une entrée de produit de revêtement (23) pour l'introduction du produit de revêtement à appliquer dans l'espace de buses (15) de l'applicateur et/ou
b) une sortie de produit de revêtement (24) pour le retour du produit de revêtement non appliqué de l'espace de buses (15) de l'applicateur vers un retour de produit de revêtement et/ou
c) une entrée de fluide de blocage (25) pour l'introduction d'un fluide de blocage dans l'espace de fluide (22) entre les deux membranes (14a, 14b) et/ou
d) une sortie de fluide de blocage (26), pour le retour du fluide de blocage de l'espace de fluide (22) de l'applicateur vers un retour de fluide de blocage.

**13.** Installation d'application avec

a) un applicateur selon la revendication 12,
b) une source de produit de revêtement (27, 28) qui introduit de produit de revêtement dans l'entrée de produit de revêtement (23) de l'applicateur et/ou
c) une source de fluide de blocage (31, 32) qui introduit le fluide de blocage dans l'entrée de fluide de blocage (25) de l'applicateur et/ou
d) un étranglement au niveau de la sortie de fluide de blocage (26) pour le contrôle de la pression dans l'espace de fluide (22) et/ou
e) une soupape de produit de revêtement (29) au niveau de la sortie de produit de revêtement (24), dans lequel la soupape de produit de revêtement (29) conduit le produit de revêtement non appliqué de l'applicateur soit vers l'élimination dans un récipient de déchets (30) soit pour une réutilisation vers la source de produit de revêtement (27), et/ou

f) une soupape de fluide de blocage (34) au niveau de la sortie de fluide de blocage (26), dans lequel la soupape de fluide de blocage (34) conduit le produit de revêtement non appliqué de l'applicateur soit vers l'élimination dans un récipient de déchets (30) soit pour une réutilisation vers la source de fluide de blocage (31).

**14.** Installation d'application selon la revendication 13, **caractérisée en ce que**

a) un dispositif de commande est prévu pour le contrôle du remplissage de l'espace de fluide (22) de l'applicateur avec le fluide de blocage et/
b) le dispositif de commande remplit l'espace de fluide (22) respectivement avant le début de l'application une fois avec le fluide de blocage et
c) le dispositif de commande remplit l'espace de fluide (22) à intervalles réguliers, plus particulièrement

c1) toutes les heures,
c3) quotidiennement
c4) hebdomadairement
c5) mensuellement.

Fig. 1A

Fig. 1B

6

14

16

15                18

17

Fig. 2

6

14

16

15

17

Fig. 3

6

14

16

15

17

Fig. 4

Fig. 5

Fig. 6

Fig. 7

Fig. 8A

Fig. 8B
Schnitt A-A

Fig. 8C
Schnitt B-B

## Fig. 9A

**Fig. 9A**

## Fig. 9B
Schnitt A-A

## Fig. 9C
Schnitt B-B

19A  19B

20

D

C

B  A

**Fig. 10A**

19B
19A
14

**Fig. 10B**
Schnitt C-C

19B  19A
14

**Fig. 10C**
Schnitt D-D

19B
20

**Fig. 10D**
Schnitt B-B

19A

**Fig. 10E**
Schnitt A-A

Erhöhte Struktur

vertiefte Struktur

EP 3 687 699 B1

Fig. 11A

Fig. 11B
Schnitt C-C

Fig. 11C
Schnitt D-D

Fig. 11D
Schnitt B-B

Fig. 11E
Schnitt A-A

Erhöhte Struktur

vertiefte Struktur

Fig. 12

Fig. 13

Fig. 14

Fig. 15

Fig. 16

Fig. 17

EP 3 687 699 B1

$$p_s = p_m$$

$$p_m$$

14b

6

22

14a

15

1

2

Fig. 18A

$$p_s > p_m$$

$$p_m$$

14b

6

22

14a

15

1

2

Fig. 18B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9108424 B2
- WO 2012058373 A2
- WO 2013013983 A1
- DE 2810761 A1
- US 5602575 A
- WO 03004172 A1
- WO 2015186014 A1